(19) Europäisches Patentamt
European Patent Office
Office européen des brevets

(11) **EP 4 621 948 A1**

(12) **EUROPEAN PATENT APPLICATION**
published in accordance with Art. 153(4) EPC

(43) Date of publication:
**24.09.2025 Bulletin 2025/39**

(21) Application number: 23928293.2

(22) Date of filing: **15.09.2023**

(51) International Patent Classification (IPC):
*H01M 50/188* (2021.01)      *H01M 50/103* (2021.01)
*H01M 50/184* (2021.01)

(52) Cooperative Patent Classification (CPC):
H01M 50/103; H01M 50/15; H01M 50/176;
H01M 50/184; H01M 50/188; H01M 50/55;
H01M 50/553; H01M 50/567; Y02E 60/10

(86) International application number:
**PCT/CN2023/119089**

(87) International publication number:
**WO 2024/192988 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.03.2023 CN 202310272167**

(71) Applicant: **Contemporary Amperex Technology
(Hong Kong) Limited
Hong Kong (HK)**

(72) Inventors:
• **CHEN, Xinxiang**
  **Ningde, Fujian 352100 (CN)**

• **HUANG, Shoujun**
  **Ningde, Fujian 352100 (CN)**
• **LIN, Denghua**
  **Ningde, Fujian 352100 (CN)**
• **ZHENG, Yulian**
  **Ningde, Fujian 352100 (CN)**
• **WANG, Peng**
  **Ningde, Fujian 352100 (CN)**
• **JIN, Haizu**
  **Ningde, Fujian 352100 (CN)**

(74) Representative: **Gong, Jinping
CocreateIP
Neumarkter Straße 21
81673 München (DE)**

(54) **BATTERY CELL, BATTERY, AND ELECTRICAL DEVICE**

(57)     A battery cell, a battery, and a power consuming apparatus are provided. The battery cell includes an electrode assembly, a housing, a sealing member, an electrode terminal, and a first insulating member. A wall part of the housing includes a body and a flange, the body is provided with a first through hole, and the flange is arranged around the first through hole. The sealing member is at least partially arranged around the first through hole. Each electrode terminal is at least partially located in a space defined by the flange, and the sealing member is at least partially sandwiched between the electrode terminal and the body. The first insulating member is located between the flange and the electrode terminal, to insulate the flange from the electrode terminal. The flange includes a pressing portion and a first connection portion, the first connection portion connects the body to the pressing portion, the pressing portion presses against the electrode terminal through the first insulating member, to enable the electrode terminal and the body to tightly sandwich the sealing member, and projections of the pressing portion and the electrode terminal in a thickness direction of the body at least partially overlap, so that the pressing portion can stably and reliably press against the sealing member, to reduce a risk of leakage of an electrolyte solution.

FIG. 7

EP 4 621 948 A1

## Description

This application claims priority to Chinese Patent Application No. 202310272167.2, entitled "BATTERY CELL, BATTERY, AND POWER CONSUMING APPARATUS" filed with the China National Intellectual Property Administration on March 20, 2023, which is incorporated by reference in its entirety.

## TECHNICAL FIELD

This application relates to the field of sealing technologies, and in particular, to a battery cell, a battery, and a power consuming apparatus.

## BACKGROUND

As a smallest unit of a battery, a battery cell usually includes a shell and an electrode assembly. A housing includes the shell and an end cap, the electrode assembly is arranged in the shell, the shell is filled with an electrolyte solution, and the electrode assembly electrochemically reacts with the electrolyte solution, to implement charging/discharging of the battery cell. The end cap is sealingly arranged on the shell and is configured to seal the electrolyte solution inside the shell. However, the electrolyte solution is prone to leakage during actual use, affecting performance of the battery cell.

The statements herein are only for providing background information related to this application, but do not necessarily constitute the related art.

## SUMMARY

An objective of embodiments of this application is to provide a battery cell, a battery, and a power consuming apparatus, including but not limited to resolving a technical problem that an electrolyte solution of the battery cell is prone to leakage.

The technical solutions used in the embodiments of this application are as follows:

According to a first aspect, a battery cell is provided, including an electrode assembly, a housing, a sealing member, an electrode terminal, and a first insulating member. The housing is configured to accommodate the electrode assembly, a wall part of the housing includes a body and a flange, the body is provided with a first through hole, the flange is arranged around the first through hole, and the body and the flange are integrally formed. The sealing member is at least partially arranged around the first through hole. Each electrode terminal is electrically connected to the electrode assembly, the electrode terminal is at least partially located in a space defined by the flange, and the sealing member is at least partially sandwiched between the electrode terminal and the body. The first insulating member is located between the flange and the electrode terminal, to insulate the flange from the electrode terminal. The flange includes a pressing portion and a first connection portion, the first connection portion connects the body to the pressing portion, the pressing portion presses against the electrode terminal through the first insulating member, to enable the electrode terminal and the body to tightly sandwich the sealing member, and projections of the pressing portion and the electrode terminal in a thickness direction of the body at least partially overlap.

In the battery cell in this embodiment of this application, the pressing portion of the flange presses against the electrode terminal through the first insulating member, so that the electrode terminal and the body tightly sandwich the sealing member, to implement sealing at the electrode terminal. In addition, the projections of the pressing portion and the electrode terminal in the thickness direction of the body at least partially overlap, that is, the electrode terminal is at least partially located between the body and the pressing portion. In this way, the pressing portion can directly press the part of the electrode terminal through the first insulating member, to improve an effect of pressing the sealing member through the electrode terminal, and reduce a risk that the pressing portion outward flips due to an external pulling force on the electrode terminal; and the sealing member can stably and reliably provide sealing between the electrode terminal and the body, to reduce a risk that an electrolyte solution in the housing leaks from a region between the electrode terminal and the body, so as to improve performance of the battery cell.

In an embodiment, the pressing portion extends in a circumferential direction of the flange and forms an annular structure.

In the battery cell in this embodiment of this application, the pressing portion extends and is distributed in the circumferential direction of the flange, and forms the annular structure. This design can increase difficulty in outward flipping of the pressing portion and reduce a risk of liquid leakage.

In an embodiment, the pressing portion defines a second through hole, the electrode terminal includes a flange portion and a first connection segment, the first connection segment passes through the second through hole, the flange portion is arranged around an outer peripheral wall of the first connection segment, the flange portion is located in the space defined by the flange, the first insulating member is at least partially located between the flange portion and the pressing portion, and the sealing member is at least partially located between the first connection segment and the body.

In the battery cell in this embodiment of this application, the pressing portion can press the flange portion, so that the electrode terminal can be pressed on an entire periphery, and the pressing portion can press against the sealing member more stably and reliably, to reduce the risk of liquid leakage. In this way, a better effect of pressing against the sealing member can be achieved on the periphery of the electrode terminal.

In an embodiment, the electrode terminal further includes a second connection segment, and one end of the second connection segment is connected to an end portion of the first connection segment facing away from the pressing portion; and the sealing member defines a third through hole, and the second connection segment passes through the third through hole.

In the battery cell in this embodiment of this application, the second connection segment passes through the third through hole. This facilitates electrical connection between the electrode assembly and the second connection segment, to implement input and output of electric energy of the battery cell.

In an embodiment, a hole diameter of the second through hole is D1, and an outer diameter of the flange portion is d1, $\dfrac{(d1 - D1)}{d1} \geq 0.05$ and/or

$$\dfrac{(d1 - D1)}{d1} \leq 0.4.$$

In the battery cell in this embodiment of this application, $\dfrac{(d1 - D1)}{d1} \geq 0.1$, so that a part of the pressing portion that directly presses against the electrode terminal through the first insulating member has a specified pressing area, and the pressing portion can stably press against the electrode terminal, to reduce the risk of liquid leakage; and/or $\dfrac{(d1 - D1)}{d1} \leq 0.4$, so that the hole diameter of the second through hole is appropriate, and a cross-sectional area of the first connection segment is appropriate. In this way, the electrode terminal has a good current-carrying capacity.

In an embodiment, the hole diameter of the second through hole is D1, and the outer diameter of the flange portion is d1, d1 - D1 ≥ 0.8 mm and/or d1 - D1 ≤ 3 mm.

In the battery cell in this embodiment of this application, d1 - D1 ≥ 0.8 mm , so that an extension length of the pressing portion toward the first connection segment is long, a risk of outward flipping of the pressing portion is low, sealing reliability is good, and the leakage risk is small; and/or d1 - D1 ≤ 3 mm, so that an extension length of the pressing portion toward the first connection segment is appropriate, and manufacture and bending of the flange are simple, to facilitate processing and manufacture.

In an embodiment, the hole diameter of the second through hole is D1, and an outer diameter of the first connection segment is d2, D1 - d2 ≥ 0.5 mm and/or D1 - d2 ≤ 2.5 mm.

In the battery cell in this embodiment of this application, D1 - d2 ≥ 0.5 mm, so that there is a spacing between an inner wall of the second through hole and the outer peripheral wall of the first connection segment, and the spacing can accommodate a part of the first insulating member with a specified thickness, to reduce a creepage risk of the first connection segment; and/or D1 - d2 ≤ 2.5 mm, so that the outer diameter of the first connection segment 122 can be set to be sufficiently large, and the electrode terminal 120 has a good current-carrying capacity.

In an embodiment, the first connection portion is arranged around the first insulating member and defines a fourth through hole, a hole diameter of the fourth through hole is D2, and the outer diameter of the flange portion is d1, D2 - d1 ≥ 0.5 mm and/or D2 - d1 ≤ 2.5 mm.

In the battery cell in this embodiment of this application, D2 - d1 ≥ 0.5 mm , so that there is a spacing between an inner wall of the fourth through hole and an outer peripheral wall of the flange portion, and a part of the first insulating member located in the spacing has a specified thickness, to reduce a short circuit risk caused by a foreign object such as a metal burr puncturing the part; and/or D2 - d1 ≤ 2.5 mm , so that a moment arm for outward flipping of the pressing portion is not excessively large, a risk of outward flipping of the pressing portion is low, and a risk of leakage of an electrolyte solution is low.

In an embodiment, the first insulating member includes a first insulating portion and a second insulating portion that are connected, where the first insulating portion covers the flange portion, the second insulating portion is located between an inner wall of the second through hole and the outer peripheral wall of the first connection segment, and the pressing portion presses against a surface of the first insulating portion facing away from the body.

In the battery cell in this embodiment of this application, the first insulating portion may insulate the flange portion from the flange, and the second insulating portion may insulate the first connection segment from the pressing portion, so that the flange can be insulated from the electrode terminal.

In an embodiment, the second insulating portion protrudes out of a surface of the pressing portion facing away from the body; or a surface of the second insulating portion facing away from the body is flush with a surface of the pressing portion facing away from the body.

Through the battery cell in this embodiment of this application, the creepage risk can be reduced.

In an embodiment, projections of the pressing portion and the sealing member in the thickness direction of the body at least partially overlap.

In the battery cell in this embodiment of this application, the sealing member is at least partially located between the body and the pressing portion, so that the pressing portion can directly press against the part of the sealing member between the body and the pressing portion through the first insulating member and the electrode terminal, to improve the effect of pressing against the sealing member, and reduce the risk of liquid leakage.

In an embodiment, the pressing portion is formed by bending a part of the flange toward an axis of the first through hole.

In the battery cell in this embodiment of this application, the part of the flange is bent to form the pressing portion, and the pressing portion is easily processed and manufactured.

In an embodiment, Brinell hardness of the pressing portion ranges from 10 HBW to 100 HBW.

In the battery cell in this embodiment of this application, the Brinell hardness of the pressing portion is limited within the foregoing range, so that the pressing portion can press against the electrode terminal with sufficiently high hardness, and the flange can be bent to form the pressing portion.

In an embodiment, a material of the pressing portion includes aluminum alloy.

In the battery cell in this embodiment of this application, the pressing portion is made of aluminum alloy. In this case, aluminum alloy is easily obtained and is cheap, so that manufacturing costs of the housing can be reduced. In addition, aluminum alloy further has appropriate hardness, to meet bend-forming and pressing requirements of the pressing portion.

In an embodiment, a thickness of the first connection portion is greater than or equal to 0.8 mm; and/or a thickness of the first connection portion is less than or equal to 1.5 mm.

In the battery cell in this embodiment of this application, the thickness of the first connection portion is greater than or equal to 0.8 mm, and the first connection portion has good structural strength and can stably support the pressing portion, to reduce the risk of outward flipping of the pressing portion. A thickness h1 of the first connection portion 1121 is less than or equal to 1.5 mm, so that the thickness of the first connection portion 1121 is not designed to be excessively large, to reduce material buildup, reduce a volume, and improve volume utilization.

In an embodiment, a thickness of the pressing portion is greater than or equal to 0.8 mm; and/or a thickness of the pressing portion is less than or equal to 1.5 mm.

In the battery cell in this embodiment of this application, the thickness of the pressing portion is greater than or equal to 0.8 mm, and the pressing portion has a specified thickness, so that the pressing portion is not easily deformed, to enable the pressing portion to press against the electrode terminal, and the pressing portion has good resistance to outward flipping, to reduce the risk of the electrolyte solution. A thickness h2 of the pressing portion is less than or equal to 1.5 mm, so that the thickness of the pressing portion is not set to be excessively large, and has small impact on a dimension of another component such as the electrode terminal. This helps reduce a volume of the battery cell and help improve energy density of the battery.

In an embodiment, the flange further includes a second connection portion, the second connection portion connects the first connection portion to the pressing portion, and a chamfered corner surface is formed on a surface of the second connection portion facing away from the electrode terminal.

In the battery cell of this embodiment of this application, arrangement of the chamfered corner surface facilitates bending processing of the flange, and during processing, a tool is better controlled under a reaction force, so that bending processing of the flange is simple and quick.

In an embodiment, an angle between the chamfered corner surface and an axis of the flange ranges from 30° to 60°.

In the battery cell in this embodiment of this application, an angle $\alpha$ between the chamfered corner surface and the axis of the flange is set in the foregoing range, structural strength of the second connection portion is good, and the pressing portion does not easily outward flip.

In an embodiment, a ratio of a dimension of the chamfered corner surface in a thickness direction of the first connection portion to the thickness of the first connection portion is greater than or equal to 0.3; and/or a ratio of a dimension of the chamfered corner surface in a thickness direction of the connection portion to the thickness of the connection portion is less than or equal to 0.6.

In the battery cell in this embodiment of this application, the ratio of the dimension of the chamfered corner surface in the thickness direction of the first connection portion to the thickness of the first connection portion is greater than or equal to 0.3, so that an area of the chamfered corner surface is large, to facilitate processing of the flange 112; and/or a ratio of a dimension of the chamfered corner surface in a thickness direction of the first connection portion to the thickness of the first connection portion is less than or equal to 0.6, so that the chamfered corner surface may not be excessively inclined toward the first connection portion, the second connection portion has good structural strength, and structural strength of the flange is good, to reduce the risk of liquid leakage.

In an embodiment, a ratio of a dimension of the chamfered corner surface in a thickness direction of the pressing portion to the thickness of the pressing portion is greater than or equal to 0.3; and/or a ratio of a dimension of the chamfered corner surface in a thickness direction of the pressing portion to the thickness of the pressing portion is less than or equal to 0.6.

In the battery cell in this embodiment of this application, the ratio of the dimension of the chamfered corner surface in the thickness direction of the pressing portion to the thickness of the pressing portion is greater than or equal to 0.3, so that an area of the chamfered corner surface is large, to facilitate processing of the flange; and/or the ratio of the dimension of the chamfered corner surface in the thickness direction of the pressing portion to the thickness of the pressing portion is less than or equal to 0.6, so that the chamfered corner surface may not be excessively inclined toward the pressing portion, the second connection portion has good structural strength, and structural strength of the flange is good, to reduce the risk of liquid leakage.

In an embodiment, the flange further includes a third connection portion, and the third connection portion is connected between the body and the first connection portion; and a rounded corner surface is formed on a surface of the third connection portion facing away from the electrode terminal.

In the battery cell of this embodiment of this application, arrangement of the rounded corner surface can reduce stress concentration at a joint between the flange and the body, and reduce a risk of fracture between the flange and the body.

In an embodiment, a radius of the rounded corner surface is greater than or equal to 0.4 mm.

In the battery cell in this embodiment of this application, the radius of the rounded corner surface is greater than or equal to 0.4 mm, so that the third connection portion has a specified thickness, to reduce a fracture risk.

In an embodiment, an auxiliary slot is formed on a surface of the body facing away from the flange, and the auxiliary slot is arranged opposite to the flange and is configured to assist in manufacture of the flange.

In the battery cell in this embodiment of this application, the auxiliary slot is stamped on the body to obtain a protrusion structure, and an operation of pressing the protrusion structure to manufacture the flange is simple.

In an embodiment, a slot depth of the auxiliary slot is H1, and a height difference between the pressing portion and the body is H2, $\frac{H1}{H2} \geq 0.1$.

In the battery cell in this embodiment of this application, $\frac{H1}{H2} \geq 0.1$, so that a ratio of the slot depth of the auxiliary slot to the height difference between the pressing portion and the body is limited, the auxiliary slot can have a sufficient slot depth, and a height of the protrusion structure protruding out of the body is sufficiently high. In this way, the flange can be conveniently obtained through pressing and processing.

In an embodiment, the housing includes a shell and an end cap, and the end cap covers an opening of the shell; and the end cap or a wall part of the shell forms the wall part of the housing.

In the battery cell in this embodiment of this application, components such as the electrode terminal and the sealing member can be mounted on the end cap or the wall part of the shell.

According to a second aspect, a battery is provided, including the foregoing battery cell.

In the battery in this embodiment of this application, the foregoing battery cell is used, and a risk of liquid leakage of the battery cell is low, so that performance and usage reliability of the battery are good.

According to a third aspect, a power consuming apparatus is provided, including the foregoing battery.

In the power consuming apparatus in this embodiment of this application, the foregoing battery is used, and a risk of liquid leakage of the battery is low, so that performance and usage reliability of the power consuming apparatus are good.

**BRIEF DESCRIPTION OF THE DRAWINGS**

To describe the technical solutions in embodiments of this application more clearly, the following briefly introduces the accompanying drawings required for describing the embodiments or exemplary technologies. Apparently, the accompanying drawings in the following descriptions show merely some embodiments of this application, and a person of ordinary skill in the art may still derive other accompanying drawings from these accompanying drawings without creative efforts.

FIG. 1 is a schematic diagram of a structure of a vehicle according to an embodiment of this application;
FIG. 2 is a schematic diagram of a structure of a battery according to an embodiment of this application;
FIG. 3 is a schematic diagram of a structure of a battery cell according to an embodiment of this application;
FIG. 4 is a schematic exploded view of a battery cell according to an embodiment of this application;
FIG. 5 is a schematic diagram of a structure of a housing in FIG. 4 whose shell is hidden;
FIG. 6 is a cross-sectional view along a line A-A in FIG. 5;
FIG. 7 is a partial enlarged view at B in FIG. 6;
FIG. 8 is a schematic exploded view of a housing in FIG. 4 whose shell is hidden;
FIG. 9 is a schematic diagram of a structure of an end cap in FIG. 8;
FIG. 10 is a cross-sectional view along a line D-D in FIG. 9;
FIG. 11 is a partial enlarged view at E in FIG. 10;
FIG. 12 is a partial enlarged view at F in FIG. 11;
FIG. 13 is a schematic diagram of a structure of an electrode terminal in FIG. 8; and
FIG. 14 is a cross-sectional view along a line G-G in FIG. 13.

Reference numerals in the drawings are as follows:
1000 - vehicle; 1100 - battery; 1200 - controller; 1300 - motor; 10 - box; 11 - first portion; 12 - second portion; 20 - battery cell; 100 - housing; 110 - end cap; 111 - body; 1111 - first through hole; 1112 - auxiliary slot; 112 - flange; 1121 - first connection portion; 1122 - pressing portion; 1123 - second connection portion; 1124 - third connection portion; 1101 - second through hole; 1102 - fourth through hole; 11231 - chamfered corner surface; 11241 - rounded corner surface; 120 - electrode terminal; 121 - flange portion; 122 - first connection segment; 123 - second connection segment; 130 - sealing member; 131 - third through hole; 140 - first insulating member; 141 - first insulating portion; 142 - second insulating portion; 150 - second insulating member; 160 - electrical connector; 170 - pressure relief mechanism; 180 - shell; 200 - electrode assembly; and 300 - third insulating member.

## DETAILED DESCRIPTION

Embodiments of this application are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary, and are intended to explain this application and cannot be construed as a limitation to this application.

In the descriptions of this application, it should be understood that orientation or position relationships indicated by the terms such as "length", "width", "above", "below", "front", "rear", "left", "right", "vertical", "horizontal", "top", "bottom", "inside", and "outside" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as a limitation to this application.

In addition, the terms "first" and "second" are used merely for the purpose of description, and shall not be construed as indicating or implying relative importance or implying a quantity of indicated technical features. Therefore, features defining "first" and "second" may explicitly or implicitly include one or more such features. In the descriptions of this application, "a plurality of" means two or more, unless otherwise definitely and specifically limited.

In this application, unless otherwise explicitly specified or defined, the terms such as "install", "connect", "connection", and "fix" should be understood in a broad sense. For example, the connection may be a fixed connection, a detachable connection, or an integral connection; the connection may be a mechanical connection or an electrical connection; or the connection may be a direct connection, an indirect connection through an intermediate medium, internal communication between two components, or an interaction relationship between two components. A person of ordinary skill in the art may understand specific meanings of the foregoing terms in this application according to specific cases.

In the descriptions of this application, it is to be noted that, the term "and/or" in this specification describes only an association relationship for describing associated objects and represents that three relationships may exist. For example, A and/or B may represent the following three cases: Only A exists, both A and B exist, and only B exists.

It should be further noted that in the embodiments of this application, a same reference numeral is used to represent a same component or a same part. For a same component in the embodiments of this application, a reference numeral may be marked by using only one of the components as an example in the figures. It should be understood that, for another same component or component, the reference numeral is also applicable.

In this application, the term such as "an embodiment", "some embodiments", "an example", "a specific example", or "some examples" means that a feature, structure, material, or characteristic that is described with reference to the embodiment or the example is included in at least one embodiment or example of this application. In this specification, exemplary descriptions of the foregoing terms do not necessarily refer to a same embodiment or example. Besides, the specific features, the structures, the materials or the characteristics that are described may be combined in proper manners in any one or more embodiments or examples. In addition, a person skilled in the art may integrate or combine different embodiments or examples described in the specification and features of the different embodiments or examples as long as they are not contradictory to each other.

Currently, from the perspective of development of the market situation, application of batteries is increasingly wide. The batteries are used in energy storage power systems such as water power plants, fire power plants, wind power plants, and solar power plants, and are also widely used in electric mobility devices such as electric bicycles, electric motorcycles, electric vehicles, as well as in military equipment, aerospace, and other fields. With continuous expansion of application fields of batteries, market demands for batteries are also expanding.

As a smallest unit of a battery, a battery cell usually includes a shell and an electrode assembly. A housing includes the shell and an end cap, the electrode assembly is arranged in the shell, the shell is filled with an electrolyte solution, and the electrode assembly electrochemically reacts with the electrolyte solution, to implement charging/discharging of the battery cell. The end cap is sealingly arranged on the shell and is configured to seal the electrolyte solution inside the shell. However, the electrolyte solution is prone to leakage during actual use, affecting performance of the battery cell.

One of reasons that the electrolyte solution is prone to leakage is that, an electrode terminal, an insulating member, and a sealing member are mounted on the end cap, an end portion of a flange on the end cap facing away from the end cap is bent toward the electrode terminal and presses against the insulating member, the insulating member presses against the electrode terminal and presses the sealing member, and the pressed sealing member is deformed, to implement a sealing connection between the electrode terminal and the end cap. However, during actual use, under the action of an external pulling force on the electrode terminal, the flange is likely to outward flip in a direction facing away from the electrode terminal. As a result, a pressing force for the sealing member is insufficient, a sealing effect of the sealing member is poor, and the electrolyte solution is likely to leak from a region between the electrode terminal and the end cap, improving the performance of the battery cell.

To alleviate the leakage problem of the electrolyte solution, a battery cell is designed. A structure of the flange is optimized, so that the flange can stably and reliably press against the electrode terminal, and the electrode terminal provides a sufficient pressing force for the sealing member. In this way, the sealing member can stably and reliably form sealing between the electrode terminal and the end cap, to reduce a risk of leakage of the electrolyte solution.

The embodiments of this application disclose a battery cell, a battery, and a power consuming apparatus using the battery as a power supply. The power consuming apparatus may be, but is not limited to, a mobile phone, a tablet computer, a notebook computer, an electric toy, an electric tool, an electric scooter, an electric vehicle, a ship, a spacecraft, or the like. The electric toy may include a fixed or mobile electric toy, for example, a game console, an electric car toy, an electric ship toy, and an electric airplane toy. The spacecraft may include an airplane, a rocket, a space shuttle, a spaceship, and the like.

For ease of description in the following embodiments, an example in which a power consuming apparatus in an embodiment of this application is a vehicle 1000 is used for description.

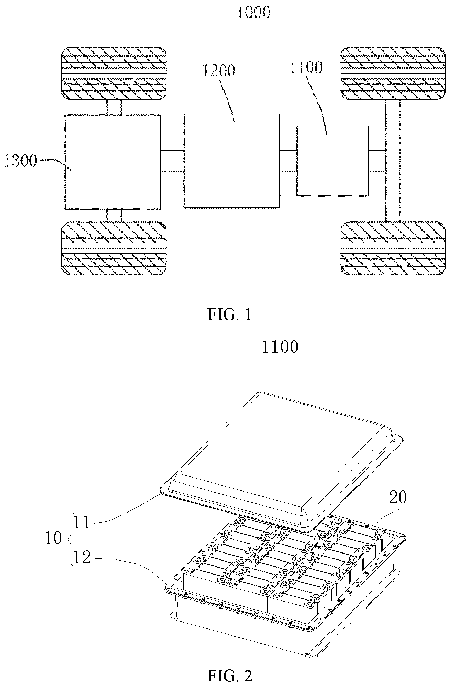

Refer to FIG. 1. FIG. 1 is a schematic diagram of a structure of a vehicle 1000 according to some embodiments of this application. The vehicle 1000 may be a fuel powered vehicle, a gas powered vehicle, or a new energy vehicle. The new energy vehicle may be a pure electric vehicle, a hybrid electric vehicle, an extended range vehicle, or the like. A battery 1100 is arranged inside the vehicle 1000. The battery 1100 may be arranged at the bottom, head, or tail of the vehicle 1000. The battery 1100 may be configured to supply power to the vehicle 1000. For example, the battery 1100 may be used as a power supply for operating the vehicle 1000. The vehicle 1000 may further include a controller 1200 and a motor 1300. The controller 1200 is configured to control the battery 1100 to supply power to the motor 1300, for example, to be used for working electricity requirements during startup, navigation, and driving of the vehicle 1000.

In some embodiments of this application, the battery 1100 can not only serve as a power supply for operating the vehicle 1000, but can also serve as a power supply for driving the vehicle 1000, in place of or partially in place of fuel or natural gas, to provide driving power for the vehicle 1000.

Referring to FIG. 2, as an embodiment of the battery 1100, the battery 1100 includes a box 10 and battery cells 20, where the battery cells 20 are accommodated in the box 10 of the battery. The box 10 is configured to provide an accommodating space for the battery cells 20. The box 10 may be of a variety of structures. In some embodiments, the box 10 may include a first portion 11 and a second portion 12, the first portion 11 and the second portion 12 cover each other, and the first portion 11 and the second portion 12 jointly define the accommodating space for accommodating the battery cells 20. The second portion 12 may be of a hollow structure with an opening at one end, the first portion 11 may be of a plate-like structure, and the first portion 11 covers an opening side of the second portion 12, so that the first portion 11 and the second portion 12 jointly define the accommodating space. Alternatively, the first portion 11 and the second portion 12 each may be of a hollow structure with an opening on one side, and an opening side of the first portion 11 covers an opening side of the second portion 12. Certainly, the box 10 formed by the first portion 11 and the second portion 12 may be in various shapes, such as a cylinder and a cuboid.

In the battery 1100, there may be a plurality of battery cells 20, and the plurality of battery cells 20 may be connected in series, parallel, or series-parallel. Series-parallel connection means that both series connection and parallel connection exist among the plurality of battery cells 20.

In an embodiment, the plurality of battery cells 20 may be directly connected in series, parallel, or series-parallel together, and then the whole formed by the plurality of battery cells 20 may be accommodated in the box 10. Certainly, the battery 1100 may also be in the form of a battery module formed by the plurality of battery cells 20 that are first connected in series, parallel, or series-parallel. A plurality of battery modules are then connected in series, parallel, or series-parallel to form a whole and accommodated in the box 10. The battery 1100 may alternatively be of another structure. For example, the battery 1100 may further include a busbar component, configured to implement electrical connection between the plurality of battery cells 20.

Each battery cell 20 may be a secondary battery or a primary battery; or may be a lithium-sulfur battery, a sodium-ion battery, or a magnesium-ion battery, but is not limited thereto. The battery cell 20 may be cylindrical, flat-shaped, cuboid-shaped, or in another shape.

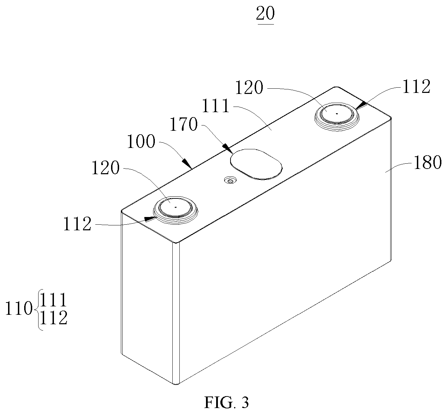

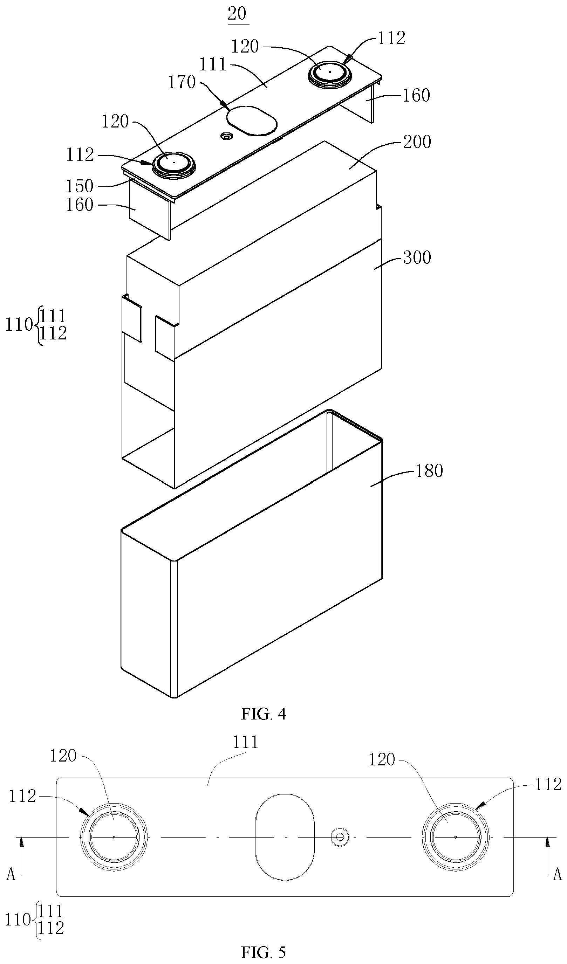

Refer to FIG. 3. FIG. 3 is a schematic diagram of a structure of a battery cell 20 according to some embodiments of this application. FIG. 4 is a schematic exploded view of a battery cell 20 according to some embodiments of this application. The battery cell 20 is a smallest unit forming a battery. As shown in FIG. 3 and FIG. 4, the battery cell 20 includes a housing 100, an electrode assembly 200, and other functional components. The housing 100 includes the battery cell 20 and a shell 180.

The housing 100 includes an end cap 110 and the shell 180. The end cap 110 is a component that covers an opening of the shell 180 to isolate an internal environment of the battery cell 20 from an external environment. A shape of the end cap 110 is not limited and may be adapted to a shape of the shell 180 to fit the shell 180. Optionally, the end cap 110 may be made of a material with specified hardness and strength (for example, aluminum alloy), so that the end cap 110 is less likely to be deformed under pressing and collision, to enable the battery cell 20 to have higher structural strength and enhanced safety performance. The end cap 110 may also be made of various materials, such as copper, iron, aluminum, stainless steel, aluminum alloy, and plastic. This is not particularly limited in the embodiments of this application.

In some embodiments, functional components such as an electrode terminal 120 may be arranged on the end cap 110. The electrode terminal 120 may be electrically connected to the electrode assembly 200 through an electrical connector 160, to output or input electric energy of the battery cell 20. In some embodiments, a pressure relief mechanism 170 configured to relieve internal pressure when the internal pressure or a temperature of the battery cell 20 reaches a threshold is further arranged on the end cap 110. In some embodiments, second insulating members 150 may be further arranged on the end cap 110. Each second insulating member 150 may be configured to insulate the electrical connector 160 in the shell 180 from the end cap 110, to reduce a short circuit risk. For example, the second insulating member 150 may be made of plastic, rubber, or the like.

The shell 180 is an assembly configured to form an internal environment of the battery cells 20 together with the end cap 110, where the formed internal environment may be configured to accommodate the electrode assembly 200, an electrolyte solution, and other components. The shell 180 and the end cap 110 may be separate components, the opening may be provided on the shell 180, and at the opening, the end cap 110 covers the opening to form the internal environment of the battery cells 20. In an embodiment, the end cap 110 and the shell 180 may form a shared joint surface before other components are arranged inside the housing, and then the end cap 110 covers the shell 180 when the inside of the shell 180 needs to be packaged. The shell 180 may be in various shapes and sizes, such as a cylindrical shape, a rectangular shape, and a hexagonal prism shape. In an embodiment, the shape of the shell 180 may be determined based on a specific shape and size of the electrode assembly 200. The shell 180 may be made of various materials, such as copper, iron, aluminum, stainless steel, aluminum alloy, and plastic. This is not particularly limited in the embodiments of this application. The electrode assembly 200 is externally covered with a third insulating member 300, so that the electrode assembly 200 is insulated from the shell 180, to reduce the short circuit risk. For example, the third insulating member 300 may be a plastic film or the like.

The electrode assembly 200 is a component in the battery cell 20 that undergoes an electrochemical reaction. The shell 180 may include one or more electrode assemblies 200. The electrode assembly 200 includes a positive electrode, a negative electrode, and a separator. During charging/discharging of the battery cell 20, active ions (for example, lithium ions) are intercalated and deintercalated back and forth between the positive electrode and the negative electrode. The separator is arranged between the positive electrode and the negative electrode, and mainly serves to reduce a short circuit between the positive electrode and the negative electrode while allowing the active ions to pass through.

In some embodiments, the positive electrode may be a positive electrode plate, and the positive electrode plate may include a positive electrode current collector and a positive electrode active material arranged on at least one surface of the positive electrode current collector.

In some embodiments, the negative electrode may be a negative electrode plate, and the negative electrode plate may include a negative electrode current collector and a negative electrode active material arranged on at least one surface of the negative electrode current collector.

In some implementations, the separator is a separator film. The type of the separator film is not particularly limited in this application, and any well-known separator film of a porous structure having good chemical stability and mechanical stability may be used.

In some implementations, the electrode assembly 200 is of a wound structure. The positive electrode plate and the negative electrode plate are wound into the wound structure.

In some implementations, the electrode assembly 200 is of a stacked structure.

According to another embodiment of this application, a battery cell 20 is provided. With reference to FIG. 3 to FIG. 7, the battery cell 20 includes an electrode assembly 200, a housing 100, a sealing member 130, an electrode terminal 120, and a first insulating member 140. The housing 100 is configured to accommodate the electrode assembly 200, a wall part of the housing 100 includes a body 111 and flanges 112, the body 111 is provided with first through holes 1111, each flange 112 is arranged around each first through hole 1111, and the body 111 and the flange 112 are integrally formed. Each sealing member 130 is at least partially arranged around the first through hole 1111. Each electrode terminal 120 is electrically connected to the electrode assembly 200, the electrode terminal 120 is at least partially located in a space defined by the flange 112, and the sealing member 130 is at least partially sandwiched between the electrode terminal 120 and the body 111. The first insulating member 140 is located between the flange 112 and the electrode terminal 120, to insulate the flange 112 from the electrode terminal 120, where the flange 112 includes a pressing portion 1122 and a first connection portion 1121, the first connection portion 1121 connects the body 111 to the pressing portion 1122, the pressing portion 1122 presses against the electrode terminal 120 through the first insulating member 140, to enable the electrode terminal 120 and the body 111 to tightly sandwich the sealing member 130, and projections of the pressing portion 1122 and the electrode terminal 120 in a thickness direction of the body 111 at least partially overlap.

The electrode assembly 200 is a component that undergoes an electrochemical reaction. The electrode assembly 200 may be of a structure such as the foregoing wound structure or stacked structure.

The electrode terminal 120 is a component that outputs and inputs electric energy of the battery cell 20. The electrode terminal 120 is electrically connected to the electrode assembly 200, to implement input and output of the electric energy of the battery cell 20. The electrode terminal 120 may be in various shapes, such as a column shape, a plate shape, and a block shape.

The housing 100 is a housing structure of the battery cell 20. The housing 100 defines an inner cavity, and the inner cavity provides a mounting space for the electrode assembly 200.

The wall part of the housing 100, for example, as shown in FIG. 3, may be any one of a front wall, a rear wall, a left wall, a right wall, an upper wall, or a lower wall of the housing 100.

The wall part of the housing 100 includes the body 111 and the flanges 112. The body 111 is a main portion of the wall part of the housing 100. The body 111 is provided with the first through holes 1111. The first through hole 1111 may also be in various shapes, such as a circle, an ellipse, and a polygon.

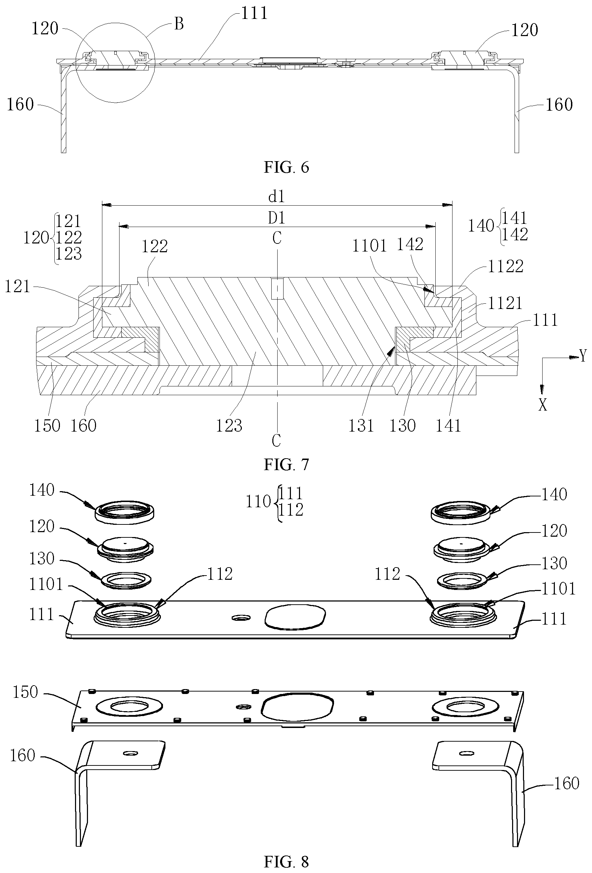

The flange 112 is a component that protrudes out of a surface of the body 111 and that is arranged around the first through hole 1111. The electrode terminal 120 is at least partially located in the space defined by the flange 112. It may be understood that the electrode terminal 120 may be partially or completely located in the space defined by the flange 112. The electrode terminal 120 may be electrically connected to the electrical connector 160 through the first through hole 1111, to be electrically connected to the electrode assembly 200, so as to implement output and input of the electric energy of the battery cell 20. For example, as shown in FIG. 7, a part (for example, a second connection segment 123) of the electrode terminal 120 facing away from the body 111 passes through the first through hole 1111 and is connected to the electrode assembly 200 through the electrical connector 160. Alternatively, the electrical connector 160 may pass through the first through hole 1111 to be electrically connected to the electrode terminal 120. In some embodiments, the second insulating member 150 is further arranged between the electrical connector 160 and the body 111. The second insulating member 150 separates the end cap 110 from the electrical connector 160, to reduce the short circuit risk.

The flange 112 and the body 111 are integrally formed. For example, the flange 112 and the body 111 are manufactured by using an integral process such as pressing, injection, or casting. The flange 112 may be of an annular integral structure, and the flange 112 may alternatively be of a segmented structure arranged along a periphery of the electrode terminal 120. The flange 112 and the body 111 are integrally formed, so that assembly procedures can be reduced, costs can be reduced, and structural strength is good.

The flange 112 includes the pressing portion 1122 and the first connection portion 1121. The first connection portion 1121 is a portion of the flange 112 that is located between the body 111 and the pressing portion 1122, or a part of the flange. The first connection portion 1121 serves to connect the pressing portion 1122 to the body 111, and may further serve to support the pressing portion 1121. The pressing portion 1122 is a part where the flange 112 presses against the first insulating member 140. The pressing portion 1122 may be separated from the body 111 in a parallel manner, or may be arranged obliquely relative to the body 111. This may be specifically designed based on an actual structure, and is not limited herein. The pressing portion 1122 may be of an annular integral structure arranged around the periphery of the electrode terminal 120. Alternatively, the pressing portion 1122 may be of a segmented structure arranged in a circumferential direction of the electrode terminal 120.

The first insulating member 140 is a component made of an insulation material. The first insulating member 140 is located between the flange 112 and the electrode terminal 120, to insulate the flange 112 from the electrode terminal 120, so as to reduce the short circuit risk. The insulation material may include, but is not limited to plastic and rubber.

The sealing member 130 is a component that can perform a sealing function. The sealing member 130 is at least partially sandwiched between the electrode terminal 120 and the body 111. The sealing member 130 can be deformed under the action of a pressing force of the electrode terminal 120, to implement sealing of a gap between the body 111 and the electrode terminal 120. The sealing member 130 may be, but is not limited to, a sealing ring or a sealing pad. The sealing member 130 may be partially sandwiched between the electrode terminal 120 and the body 111, or the sealing member 130 may be completely sandwiched between the electrode terminal 120 and the body 111.

The pressing portion 1122 presses against the electrode terminal 120 through the first insulating member 140, so that the electrode terminal 120 and the body 111 tightly sandwich the sealing member 130. It may be understood that, the pressing portion 1122 presses against the first insulating member 140, the pressing portion 1122 applies a pressing force on the first insulating member 140, and the pressing force is against the electrode terminal 120, so that the sealing member 130 is sandwiched between the electrode terminal 120 and the body 111, and the electrode terminal 120 presses the sealing member 130 toward the body 111. In this way, the sealing member 130 presses against the body 111, and the sealing member 130 is compressed and deformed after being pressed, to seal the gap between the body 111 and the electrode terminal 120. After passing through the first through hole 1111, an electrolyte solution in the shell 180 is sealed and blocked by the sealing member 130, so that it is difficult for the electrolyte solution to flow out of the battery cell 20 along the gap between the body 111 and the electrode terminal 120, to reduce a risk of liquid leakage from the battery cell 20.

The projections of the pressing portion 1122 and the electrode terminal 120 in the thickness direction (referring to an X-direction shown in FIG. 7) of the body 111 at least partially overlap. It may be understood that, as shown in FIG. 7, a plane perpendicular to a direction shown by an arrow X is defined as a projection surface, and a projection of the pressing portion 1122 on the projection surface may partially overlap or completely overlap a projection of the electrode terminal 120 on the projection surface.

In the battery cell in this embodiment of this application, the pressing portion 1122 of the flange 112 presses against the electrode terminal 120 through the first insulating member 140, so that the electrode terminal 120 and the body 111 tightly sandwich the sealing member 130, to implement sealing at the electrode terminal 120. In addition, the projections of the pressing portion 1122 and the electrode terminal 120 in the thickness direction (referring to the X-direction shown in FIG. 7) of the body 111 at least partially overlap, that is, the electrode terminal 120 is at least partially located between the body 111 and the pressing portion 1122. In this way, the pressing portion 1122 can directly press the part of the electrode terminal 120 through the first insulating member 140, to improve an effect of pressing the sealing member 130 through the electrode terminal 120, and reduce a risk that the pressing portion 1122 outward flips due to an external pulling force on the electrode terminal 120; and the sealing member 130 can stably and reliably provide sealing between the electrode terminal 120 and the body 111, to reduce a risk that the electrolyte solution in the housing 100 leaks from a region between the electrode terminal 120 and the body 111, so as to improve performance of the battery cell 20.

In another embodiment of this application, with reference to FIG. 4 to FIG. 7, the pressing portion 1122 of the provided battery cell 20 extends and is distributed in a circumferential direction of the flange 112, and forms an annular structure.

The pressing portion 1122 extends and is distributed in the circumferential direction of the flange 112, and forms the annular structure. It may be understood that, the pressing portion 1122 is annular, and the pressing portion 1122 may be in various shapes, such as a circle, an ellipse, and a polygon.

In the battery cell 20 in this embodiment of this application, the pressing portion 1122 extends and is distributed in the circumferential direction of the flange 112, and forms the annular structure. This design can increase difficulty in outward flipping of the pressing portion 1122 and reduce a risk of liquid leakage.

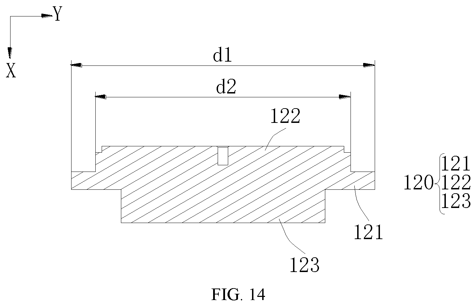

In another embodiment of this application, with reference to FIG. 4 to FIG. 7, FIG. 13, and FIG. 14, the pressing portion 1122 of the provided battery cell 20 defines a second through hole 1101, the electrode terminal 120 includes a flange portion 121 and a first connection segment 122, the first connection segment 122 passes through the second through hole 1101, the flange portion 121 is arranged around an outer peripheral wall of the first connection segment 122, the flange portion 121 is located in the space defined by the flange 112, the first insulating member 140 is at least partially located between the flange portion 121 and the pressing portion 1122, and the sealing member 130 is at least partially located between the first connection segment 122 and the body 111.

The second through hole 1101 is a through hole defined by the pressing portion 1122. The second through hole 1101 can expose the electrode terminal 120, so that the electrode terminal 120 can be connected to an external electrical connector (such as a connection bar), to output or input the electric energy of the battery cell 20. The second through hole 1101 may also be in various shapes, for example, may be a circular hole, an elliptic hole, or a polygonal hole.

The first connection segment 122 is one segment extending in an axial direction (referring to the X-direction in FIG. 7) of the electrode terminal 120. The first connection segment 122 passes through the second through hole 1101, to facilitate connection between the first connection segment 122 and the external electrical connector (such as the connection bar), so as to output or input the electric energy of the battery cell 20. The flange portion 121 is connected to the outer peripheral wall of the first connection segment 122. The flange portion 121 is arranged around the first connection segment 122, and the flange portion 121 is located in the space defined by the flange 112. The first insulating member 140 is at least partially located between the pressing portion 1122 and the flange portion 121. The sealing member 130 is at least partially located between the first connection segment 122 and the body 111. In this way, the pressing portion 1122 presses against the first insulating member 140, and the first insulating member 140 pushes against the flange portion 121, so that the first connection segment 122 presses the sealing member 130, to implement sealing of the sealing member 130 through pressing.

In the battery cell 20 in this embodiment of this application, the pressing portion 1122 can press the flange portion 121, so that the electrode terminal 120 can be pressed on an entire periphery, and the pressing portion 1122 can press against the sealing member 130 more stably and reliably, to reduce the risk of liquid leakage. In this way, a better effect of pressing against the sealing member can be achieved on the periphery of the electrode terminal 120.

In another embodiment of this application, with reference to FIG. 4 to FIG. 7, FIG. 13, and FIG. 14, the electrode terminal 120 of the provided battery cell 20 further includes a second connection segment 123, and one end of the second connection segment 123 is connected to an end portion of the first connection segment 122 facing away from the pressing portion 1122; and the sealing member 130 defines a third through hole 131, and the second connection segment 123 passes through the third through hole 131.

The second connection segment 123 is the other segment extending in the axial direction (referring to the X-direction in FIG. 7) of the electrode terminal 120. For example, as shown in FIG. 7, the second connection segment 123 is coaxially connected to the first connection segment 122, the second connection segment 123 is connected to the end portion of the first connection segment 122 facing away from the pressing portion 1122, and the electrode terminal 120 is stepped cylindrical. The sealing member 130 is arranged around the first through hole 1111. The sealing member 130 is of an annular structure. A through hole defined in the middle of the sealing member 130 is the third through hole 131. The second connection segment 123 passes through the third through hole 131, to facilitate electrical connection between the electrode assembly 200 and the second connection segment 123, so as to implement input and output of the electric energy of the battery cell 20.

In another embodiment of this application, with reference to FIG. 7, FIG. 11, and FIG. 14, a hole diameter of the second through hole 1101 of the provided battery cell 20 is D1, and an outer diameter of the flange portion 121 is d1, $\dfrac{(d1-D1)}{d1} \geq 0.05$.

In the battery cell 20 in this embodiment of this application, $\dfrac{(d1-D1)}{d1} \geq 0.05$, so that a proportion of an area of an overlapping part of the projections of the pressing portion 1122 and the electrode terminal 120 in the thickness direction of the body 111 to an area of the projection of the electrode terminal 120 in the thickness direction of the body 111 may be limited. In this way, a part of the pressing portion 1122 that directly presses against the electrode terminal 120 through the first insulating member 140 has a specified pressing area, and the pressing portion 1122 can stably press against the electrode terminal 120, to reduce the risk of liquid leakage.

In some embodiments, a value of $\dfrac{(d1-D1)}{d1}$ may be, but is not limited to, 0.05, 0.1, 0.15, 0.2, 0.25, 0.3, 0.35, 0.4, 0.45, or 0.5.

In another embodiment of this application, with reference to FIG. 7, FIG. 11, and FIG. 14, a hole diameter of the second through hole 1101 of the provided battery cell 20 is D1, and an outer diameter of the flange portion 121 is d1, $\dfrac{(d1-D1)}{d1} \leq 0.4$.

In the battery cell 20 in this embodiment of this application, $\dfrac{(d1-D1)}{d1} \leq 0.4$, so that the hole diameter of the second through hole 1101 is not excessively small, and a cross-sectional area of the first connection segment 122 is not set to be excessively small, to enable the electrode terminal 120 to have a good current-carrying capacity.

In some embodiments, a value of $\dfrac{(d1-D1)}{d1}$ may be, but is not limited to, 0.05, 0.1, 0.15, 0.2, 0.25, 0.3, 0.35, or 0.4.

In another embodiment of this application, with reference to FIG. 7, FIG. 11, and FIG. 14, a hole diameter of the second through hole 1101 of the provided battery cell 20 is D1, and an outer diameter of the flange portion 121 is d1, $0.1 \leq \dfrac{(d1-D1)}{d1} \leq 0.4$.

In the battery cell 20 in this embodiment of this application, $0.1 \leq \dfrac{(d1-D1)}{d1} \leq 0.4$, so that the risk of liquid leakage is low, and a current-carrying capacity of the electrode terminal 120 is good.

In some embodiments, a value of $\dfrac{(d1-D1)}{d1}$ may be, but is not limited to, 0.1, 0.15, 0.2, 0.25, 0.3, 0.35, or 0.4.

During actual manufacture, with reference to FIG. 5, FIG. 6, and FIG. 7, the flange 112 is first processed to be manufactured on the body 111, an end portion of the flange 112 facing away from the body 111 is bent toward the electrode terminal 120 by using a tool, to form the pressing portion 1122, and the pressing portion 1122 presses against the first insulating member 140, to fix the electrode terminal 120 and press against the sealing member 130. However, under the action such as a restoration force of the flange 112 and a reaction pressing force of the first insulating member 140 against the pressing portion 1122, the pressing portion 1122 tends to outward flip away from the electrode terminal 120, causing a problem that a dimension of the manufactured flange 112 is unstable.

In another embodiment of this application, with reference to FIG. 7, FIG. 11, and FIG. 14, a hole diameter of the second through hole 1101 of the provided battery cell 20 is D1, and an outer diameter of the flange portion 121 is d1, $d1 - D1 \geq 0.8$ mm.

In the battery cell 20 in this embodiment of this application, $d1 - D1 \geq 0.8$ mm, so that an extension length of the pressing portion 1122 toward the first connection segment 122 is long, and a risk of outward flipping of the pressing portion 1122 away from the electrode terminal 120 is low. In this way, the manufactured flange 112 has good dimensional stability, and the pressing portion 1122 can stably press against the electrode terminal 120, to reduce a risk that the electrolyte solution leaks from the electrode terminal 120.

In some embodiments, a value of d1 - D1 may be, but is not limited to, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, 3.5 mm, or 4 mm.

In another embodiment of this application, with reference to FIG. 7, FIG. 11, and FIG. 14, a hole diameter of the second through hole 1101 of the provided battery cell 20 is D1, and an outer diameter of the flange portion 121 is d1, $d1 - D1 \leq 3$ mm.

In the battery cell 20 in this embodiment of this application, $d1 - D1 \leq 3$ mm, so that an extension length of the pressing portion 1122 toward the first connection segment 122 is not excessively long, and manufacture and bending of the flange 112 are simple, to facilitate processing and manufacture. In addition, the hole diameter of the second through hole 1101 defined by the pressing portion 1122 may also not be excessively small, so that the electrode terminal 120 has a good current-carrying capacity.

In some embodiments, a value of d1 - D1 may be, but is not limited to, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, or 3 mm.

In another embodiment of this application, with reference to FIG. 7, FIG. 11, and FIG. 14, a hole diameter of the second through hole 1101 of the provided battery cell 20 is D1, and an outer diameter of the flange portion 121 is d1, $0.8$ mm $\leq d1 - D1 \leq 3$ mm.

In the battery cell 20 in this embodiment of this application, $0.8$ mm $\leq d1 - D1 \leq 3$ mm, so that manufacture and bending of the flange 112 are simple, and the pressing portion 1122 can stably press against the electrode terminal 120. In this way, the risk of leakage of the electrolyte solution is reduced, and a current-carrying capacity of the electrode terminal 120 is good.

In some embodiments, a value of d1 - D1 may be, but is not limited to, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, or 3 mm.

In another embodiment of this application, with reference to FIG. 7, FIG. 11, and FIG. 14, an outer diameter of the first connection segment 122 of the provided battery cell 20 is d2, $D1 - d2 \geq 0.5$ mm .

In the battery cell 20 in this embodiment of this application, $D1 - d2 \geq 0.5$ mm , so that there is a spacing between an inner wall of the second through hole 1101 and the outer peripheral wall of the first connection segment 122, and the spacing can accommodate a part (a second insulating portion 142) of the first insulating member 140 with a specified thickness, to reduce a creepage risk of the first connection segment 122.

In some embodiments, a value of D1 - d2 may be, but is not limited to, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, or 3 mm.

In another embodiment of this application, with reference to FIG. 7, FIG. 11, and FIG. 14, an outer diameter of the first connection segment 122 of the provided battery cell 20 is d2, $D1 - d2 \leq 2.5$ mm.

In the battery cell 20 in this embodiment of this application, $D1 - d2 \leq 2.5$ mm, so that the outer diameter of the first connection segment 122 can be set to be sufficiently large, and the electrode terminal 120 has a good current-carrying capacity. If a value of D1 - d2 is set to be excessively large, the outer diameter of the first connection segment 122 may be excessively small, and the current-carrying capacity of the electrode terminal 120 is poor.

In some embodiments, the value of D1 - d2 may be, but is not limited to, 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, or 2.5 mm.

In another embodiment of this application, with reference to FIG. 7, FIG. 11, and FIG. 14, an outer diameter of the first connection segment 122 of the provided battery cell 20 is d2, $0.5$ mm $\leq D1 - d2 \leq 2.5$ mm .

In the battery cell 20 in this embodiment of this application, $0.5$ mm $\leq D1 - d2 \leq 2.5$ mm, so that a creepage risk of the first connection segment 122 is low, and the outer diameter of the first connection segment 122 is appropriately set, to enable the electrode terminal 120 to have a good current-carrying capacity.

In some embodiments, a value of D1 - d2 may be, but is not limited to, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, or 2.5 mm.

In another embodiment of this application, with reference to FIG. 7, FIG. 11, FIG. 13, and FIG. 14, the first connection portion 1121 of the provided battery cell 20 is arranged around the first insulating member 140 and defines a fourth through hole 1102, a hole diameter of the fourth through hole 1102 is D2, and the outer diameter of the flange portion 121 is d1, D2 - d1 $\geq$ 0.5 mm.

The first connection portion 1121 is arranged around the first insulating member 140, the first connection portion 1121 is of an annular hollow structure, and a through hole defined by the first connection portion 1121 is the fourth through hole 1102. The first connection portion 1121 may be arranged perpendicular to the body 111, or may be arranged obliquely relative to the body 111. The first connection portion 1121 and the pressing portion 1122 may be arranged perpendicular to each other, or may be arranged at an obtuse angle or an acute angle. A cross section of the first connection portion 1121 may also be in various shapes, such as a circle, an ellipse, and a polygon. The fourth through hole 1102 provides a mounting space for components such as the flange portion 121, the first insulating member 140, and the sealing member 130. The fourth through hole 1102 may be in various shapes, such as a circle, a polygon, and an ellipse.

In the battery cell 20 in this embodiment of this application, D2 - d1 $\geq$ 0.5 mm, so that there is a spacing between an inner wall of the fourth through hole 1102 and an outer peripheral wall of the flange portion 121, and a part of the first insulating member 140 located in the spacing has a specified thickness, to reduce a short circuit risk caused by a foreign object such as a metal burr puncturing the part.

In some embodiments, a value of D2 - d1 may be, but is not limited to, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, or 3 mm.

In another embodiment of this application, with reference to FIG. 7, FIG. 11, and FIG. 14, the first connection portion 1121 of the provided battery cell 20 is arranged around the first insulating member 140 and defines a fourth through hole 1102, a hole diameter of the fourth through hole 1102 is D2, and the outer diameter of the flange portion 121 is d1, D2 - d1 $\leq$ 2.5 mm .

In the battery cell 20 in this embodiment of this application, D2 - d1 $\leq$ 2.5 mm , so that a spacing between an inner wall of the fourth through hole 1102 and an outer peripheral wall of the flange portion 121 is not set to be excessively large, and a distance between a reaction pressing force provided by the first insulating member 140 for the pressing portion 1122 and a joint between the pressing portion 1122 and the first connection portion 1121 is not excessively large, where a moment arm of the reaction pressing force for flipping around the joint between the pressing portion 1122 and the first connection portion 1121 is not excessively large. In this way, a risk of outward flipping of the pressing portion 1122 is low, and the risk of leakage of the electrolyte solution can be reduced.

In some embodiments, a value of D2 - d1 may be, but is not limited to, 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, or 2.5 mm.

In another embodiment of this application, with reference to FIG. 7, FIG. 11, and FIG. 14, the first connection portion 1121 of the provided battery cell 20 is arranged around the first insulating member 140 and defines a fourth through hole 1102, a hole diameter of the fourth through hole 1102 is D2, and the outer diameter of the flange portion 121 is d1, 0.5 mm $\leq$ D2 -d1 $\leq$ 2.5 mm .

In the battery cell 20 in this embodiment of this application, 0.5 mm $\leq$ D2 -d1 $\leq$ 2.5 mm , so that the short circuit risk can be reduced, and the risk of leakage of the electrolyte solution can be reduced.

In some embodiments, a value of D2 - d1 may be, but is not limited to, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, or 2.5 mm.

In another embodiment of this application, with reference to FIG. 5, FIG. 6, and FIG. 7, the first insulating member 140 of the provided battery cell 20 includes a first insulating portion 141 and a second insulating portion 142 that are connected, where the first insulating portion 141 covers the flange portion 121, the second insulating portion 142 is located between an inner wall of the second through hole 1101 and the outer peripheral wall of the first connection segment 122, and the pressing portion 1122 presses against a surface of the first insulating portion 141 facing away from the body 111.

The first insulating portion 141 is a part where the first insulating member 140 covers the flange portion 121. The first insulating portion 141 covers the flange portion 121. In this way, the first insulating portion 141 can insulate the flange portion 121 from the flange 112. A cross section of the first insulating portion 141 may be U-shaped or L-shaped, to separate the flange portion 121 from the flange 112. The second insulating portion 142 is a part where the first insulating member 140 passes through the second through hole 1101. The second insulating portion 142 is located between the inner wall of the second through hole 1101 and the outer peripheral wall of the first connection segment 122. In this way, the second insulating portion 142 may separate the first connection segment 122 from the pressing portion 1122, to insulate the flange 112 from the electrode terminal 120.

The pressing portion 1122 presses against the surface of the first insulating portion 141 facing away from the body 111. It may be understood that, the pressing portion 1122 presses the first insulating portion 141 toward the body 111, and the first insulating portion 141 pushes the flange portion 121 toward the body 111, to drive the first connection segment 122 to press the sealing member 130, so as to implement sealing of the sealing member 130 through pressing.

In the battery cell 20 in this embodiment of this application, the first insulating portion 141 may separate the flange portion 121 from the flange 112, and the second insulating portion 142 may separate the first connection segment 122 from the pressing portion 1122, so that the electrode terminal 120 is completely insulated from the flange 112 through the insulating member, to reduce the short circuit risk and improve use reliability of the battery cell 20.

In another embodiment of this application, with reference to FIG. 7, the second insulating portion 142 of the provided battery cell 20 protrudes out of a surface of the pressing portion 1122 facing away from the body 111.

In the battery cell 20 in this embodiment of this application, the second insulating portion 142 protrudes out of the surface of the pressing portion 1122 facing away from the body 111, and a part of the second insulating portion 142 that protrudes out of the pressing portion 1122 increases a creepage distance, to reduce a creepage risk.

In another embodiment of this application, a surface of the second insulating portion 142 of the provided battery cell 20 facing away from the body 111 is flush with a surface of the pressing portion 1122 facing away from the body 111, and a groove structure is not formed between the pressing portion 1122 and the first connection segment 122, so that dirt is less likely to be accumulated, thereby reducing a creepage risk due to dirt.

In another embodiment of this application, projections of the pressing portion 1122 of the provided battery cell 20 and the sealing member 130 in the thickness direction of the body 111 at least partially overlap.

The projections of the pressing portion 1122 and the sealing member 130 in the thickness direction (referring to the X-direction in FIG. 7) of the body 111 at least partially overlap. It may be understood that, as shown in FIG. 7, a plane perpendicular to a direction shown by an arrow X is defined as a projection surface, and a projection of the pressing portion 1122 on the projection surface may partially overlap or completely overlap a projection of the sealing member 130 on the projection surface.

In the battery cell 20 in this embodiment of this application, the projections of the pressing portion 1122 and the sealing member 130 in the thickness direction (referring to the X-direction shown in FIG. 7) of the body 111 at least partially overlap, that is, the sealing member 130 is at least partially located between the body 111 and the pressing portion 1122. In this way, the pressing portion 1122 can directly press against a part of the sealing member 130 between the body 111 and the pressing portion 1122 through the first insulating member 140 and the electrode terminal 120, to improve an effect of pressing the sealing member 130, and reduce a risk that the pressing portion 1122 outward flips due to an external pulling force on the electrode terminal 120; and the sealing member 130 can stably and reliably provide sealing between the electrode terminal 120 and the body 111, to reduce a risk that an electrolyte solution in the housing 100 leaks from a region between the electrode terminal 120 and the body 111.

In another embodiment of this application, the pressing portion 1122 of the provided battery cell 20 is formed by bending a part of the flange 112 toward an axis of the first through hole 1111.

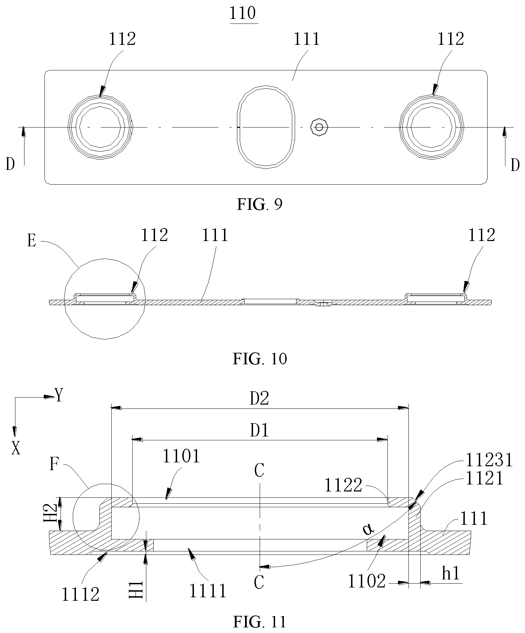

An axis of the flange 112 is, for example, a line C-C shown in FIG. 11.

In the battery cell 20 in this embodiment of this application, the part of the flange 112 is bent to form the pressing portion 1122, and the pressing portion 1122 is easily processed and manufactured.

In another embodiment of this application, Brinell hardness of the pressing portion 1122 of the provided battery cell 20 ranges from 10 HBW to 100 HBW.

Hardness of the pressing portion 1122 is Brinell hardness, in a unit of HBW. For a method for measuring Brinell hardness, refer to a measurement principle in the standard GB/T23.1-2018 for obtaining.

In the battery cell 20 in this embodiment of this application, the Brinell hardness of the pressing portion 1122 ranges from 10 HBW to 100 HBW, so that the pressing portion 1122 has specified hardness, and the pressing portion 1122 can stably press against the electrode terminal 120. In this way, a case that the pressing portion 1122 is easily deformed due to excessively small Brinell hardness of the pressing portion 1122 and cannot press against the sealing member 130 may not occur, and a case that the pressing portion 1122 is difficult to be manufactured through bending due to excessively large Brinell hardness of the pressing portion 1122 may not occur.

In an embodiment, the Brinell hardness of the pressing portion 1122 may be, but is not limited to, 10 HBW, 20 HBW, 30 HBW, 40 HBW, 50 HBW, 60 HBW, 70 HBW, 80 HBW, 90 HBW, or 100 HBW.

In another embodiment of this application, a material of the pressing portion 1122 of the provided battery cell 20 includes aluminum alloy.

Aluminum alloy is alloy formed by aluminum and a small amount of another metal such as copper, magnesium, or manganese. For example, aluminum alloy includes the following components in a percentage by mass: aluminum$\geq$99.6%, copper$\leq$0.05%, iron$\leq$0.35%, magnesium$\leq$0.03%, manganese$\leq$0.03%, silicon$\leq$0.25%, titanium$\leq$0.03%, vanadium$\leq$0.05%, zinc$\leq$0.05%, and other individual element$\leq$0.03%.

In the battery cell 20 in this embodiment of this application, the pressing portion 1122 is made of aluminum alloy. In this case, aluminum alloy is easily obtained and is cheap, so that manufacturing costs of the housing 100 can be reduced. In addition, aluminum alloy further has appropriate hardness, to meet bend-forming and pressing requirements of the pressing portion 1122.

In another embodiment of this application, with reference to FIG. 9 to FIG. 12, a thickness h1 of the first connection portion 1121 of the provided battery cell 20 is greater than or equal to 0.8 mm.

In the battery cell 20 in this embodiment of this application, the thickness h1 of the first connection portion 1121 is greater than or equal to 0.8 mm, the first connection portion 1121 has a specified thickness, and the first connection portion 1121 has good structural strength and can stably support the pressing portion 1122, to reduce a risk of outward flipping of the pressing portion 1122. In this way, the pressing portion 1122 presses against the electrode terminal 120, and the electrode terminal 120 can be stably pressed, to reduce the risk of leakage of the electrolyte solution.

In some embodiments, the thickness h1 of the first connection portion 1121 may be, but is not limited to 0.8 mm, 0.9 mm, 1 mm, 1.1 mm, 1.2 mm, 1.3 mm, 1.4 mm, 1.5 mm, 1.6 mm, or 1.7 mm.

In another embodiment of this application, with reference to FIG. 9 to FIG. 12, a thickness h1 of the first connection portion 1121 of the provided battery cell 20 is less than or equal to 1.5 mm, so that the thickness h1 of the first connection portion 1121 is not designed to be excessively large, to reduce material buildup, reduce a volume, and improve volume utilization.

In some embodiments, the thickness h1 of the first connection portion 1121 may be, but is not limited to 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, or 1.5 mm.

In another embodiment of this application, with reference to FIG. 9 to FIG. 12, a thickness h1 of the first connection portion 1121 of the provided battery cell 20 ranges from 0.8 mm to 1.5 mm, so that the first connection portion 1121 can provide good support for the pressing portion 1122, and the pressing portion 1122 can stably press against the electrode terminal 120, to reduce the risk of the electrolyte solution. In addition, material buildup can be reduced, a volume can be reduced, and volume utilization can be improved.

In some embodiments, the thickness h1 of the first connection portion 1121 may be, but is not limited to 0.8 mm, 0.9 mm, 1 mm, 1.1 mm, 1.2 mm, 1.3 mm, 1.4 mm, or 1.5 mm.

In another embodiment of this application, with reference to FIG. 9 to FIG. 12, a thickness h2 of the pressing portion 1122 of the provided battery cell 20 is greater than or equal to 0.8 mm.

In the battery cell 20 in this embodiment of this application, the thickness h2 of the pressing portion 1122 is greater than or equal to 0.8 mm, and the pressing portion 1122 has a specified thickness, so that the pressing portion 1122 is not easily deformed, to enable the pressing portion 1122 to press against the electrode terminal 120, a risk that the pressing portion 1122 outwards flips is low, and the pressing portion 1122 has good resistance to outward flipping and can stably press against the electrode terminal 120, to reduce the risk of the electrolyte solution.

In some embodiments, the thickness h2 of the pressing portion 1122 may be, but is not limited to 0.8 mm, 0.9 mm, 1 mm, 1.1 mm, 1.2 mm, 1.3 mm, 1.4 mm, 1.5 mm, 1.6 mm, or 1.7 mm.

In another embodiment of this application, with reference to FIG. 9 to FIG. 12, a thickness h2 of the pressing portion 1122 of the provided battery cell 20 is less than or equal to 1.5 mm.

In the battery cell 20 in this embodiment of this application, the thickness h2 of the pressing portion 1122 is less than or equal to 1.5 mm, so that the thickness h2 of the pressing portion 1122 is not set to be excessively large, and has small impact on a dimension of another component such as the electrode terminal 120. This helps reduce a volume of the battery cell 20 and help improve energy density of the battery 1100. For example, with reference to FIG. 7 together, when the first connection segment 122 passes through the second through hole 1101 to be connected to the external electrical connector, if the thickness of the pressing portion 1122 is large, a height of the first connection segment 122 needs to be set to be large, so that the first connection segment 122 can pass through the second through hole 1101. This increases the volume of the battery cell 20, reducing the energy density of the battery 1100.

In some embodiments, the thickness h2 of the pressing portion 1122 may be, but is not limited to 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, or 1.5 mm.

In another embodiment of this application, with reference to FIG. 9 to FIG. 12, a thickness h2 of the pressing portion 1122 of the provided battery cell 20 is greater than or equal to 0.8 mm, and the thickness of the pressing portion 1122 is less than or equal to 1.5 mm. In this way, the pressing portion 1122 can stably press against the electrode terminal 120, to reduce the risk of the electrolyte solution. In addition, this has small impact on a dimension of another component such as the electrode terminal 120. This helps reduce the volume of the battery cell 20 and help improve the energy density of the battery 1100.

In some embodiments, the thickness h2 of the pressing portion 1122 may be, but is not limited to 0.8 mm, 0.9 mm, 1 mm, 1.1 mm, 1.2 mm, 1.3 mm, 1.4 mm, or 1.5 mm.

In another embodiment of this application, with reference to FIG. 7, FIG. 11, and FIG. 12, the flange 112 of the provided battery cell 20 further includes a second connection portion 1123, the second connection portion 1123 connects the first connection portion 1121 to the pressing portion 1122, and a chamfered corner surface 11231 is formed on a surface of the second connection portion 1123 facing away from the electrode terminal 120.

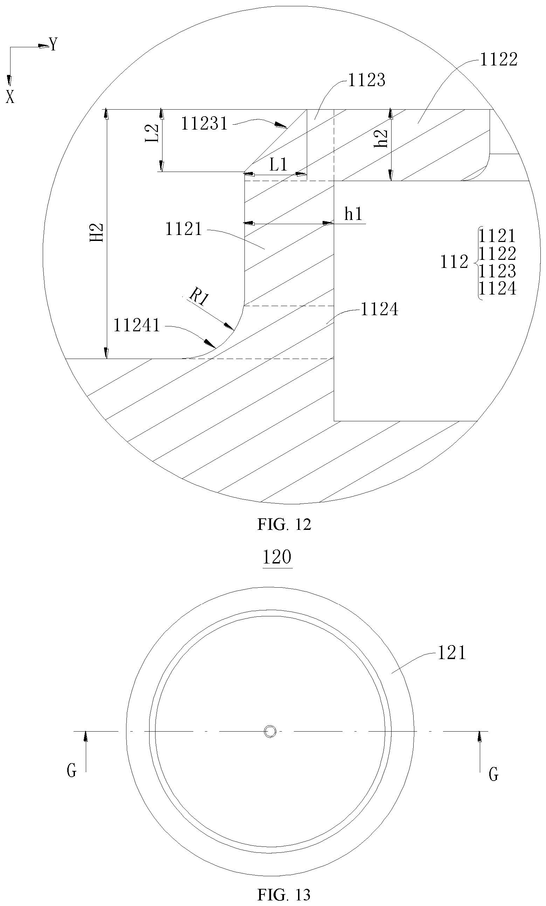

The second connection portion 1123 is a bent portion of the flange 112, and the portion connects the pressing portion 1122 to a portion of the first connection portion 1121. For example, as shown in FIG. 12, a horizontal segment of the flange 112 is divided by a vertical dashed line, a part located on the left side of the vertical dashed line is the second connection portion 1123, and a part located on the right side of the vertical dashed line is the pressing portion 1122. The first connection portion 1121 and the second connection portion 1123 are divided by an uppermost horizontal dashed line, a part above the horizontal dashed line is the second connection portion 1123, and a part below the dashed line is the first connection portion 1121.

The chamfered corner surface 11231 is an inclined surface formed on the surface of the second connection portion 1123 facing away from the electrode terminal 120. For example, as shown in FIG. 12, the chamfered corner surface 11231 extends upward at an incline toward the axis of the flange 112 until being connected to a top surface of the second connection portion 1123. When the flange 112 is pressed by using a tool to be bent to obtain the pressing portion 1122, an inclined surface matching the chamfered corner surface 11231 is arranged in the tool, and the flange 112 is pressed through the inclined surface to obtain the chamfered corner surface 11231. When the inclined surface presses the flange 112, a force of the inclined surface on the flange 112 is a force that is perpendicular to the chamfered corner surface 11231 and that faces the flange 112. A component force of the force in a Y-direction facilitates bending processing of the flange 112, and the tool is better controlled under the action of a reaction force, so that bending processing of the flange 112 is simple and quick.

In another embodiment of this application, with reference to FIG. 7 and FIG. 11, in the provided battery cell 20, an angle $\alpha$ between the chamfered corner surface 11231 and the axis of the flange 112 ranges from 30° to 60°.

In the battery cell 20 in this embodiment of this application, the angle $\alpha$ between the chamfered corner surface 11231 and the axis of the flange 112 is set in the foregoing range, structural strength of the second connection portion 1123 is good, and the pressing portion 1122 does not easily outward flip. If the angle $\alpha$ between the chamfered corner surface 11231 and the axis of the flange 112 is set to be excessively small or excessively large, the chamfered corner surface 11231 is excessively inclined, the second connection portion 1123 is thin, and the flange 112 is easily broken at the second connection portion 1123.

In an embodiment, the angle $\alpha$ between the chamfered corner surface 11231 and the axis of the flange 112 may be, but is not limited to, 30°, 35°, 40°, 45°, 50°, 55°, or 60°.

In an embodiment, the angle $\alpha$ between the chamfered corner surface 11231 and the axis of the flange 112 is 45°, so that a structure of the chamfered corner surface 11231 is regular, and the flange 112 is conveniently processed.

In another embodiment of this application, with reference to FIG. 7, FIG. 11, and FIG. 12, a ratio of a dimension L1 of the chamfered corner surface 11231 of the provided battery cell 20 in a thickness direction (referring to the Y-direction shown in FIG. 12) of the first connection portion 1121 to the thickness h1 of the first connection portion 1121 is greater than or equal to 0.3.

The dimension L1 of the chamfered corner surface 11231 in the thickness direction of the first connection portion 1121 is a dimension occupied by the chamfered corner surface 11231 in the thickness direction of the first connection portion 1121.

In the battery cell 20 in this embodiment of this application, the ratio of the dimension L1 of the chamfered corner surface 11231 in the thickness direction of the first connection portion 1121 to the thickness h1 of the first connection portion 1121 is greater than or equal to 0.3, so that an area of the chamfered corner surface 11231 is large, to facilitate processing of the flange 112. If the ratio of the dimension L1 of the chamfered corner surface 11231 in the thickness direction of the first connection portion 1121 to the thickness h1 of the first connection portion 1121 is set to be excessively small, the area of the chamfered corner surface 11231 is small, and the effect of assisting in bending of the flange 112 is not achieved desirably.

In an embodiment, the ratio of the dimension L1 of the chamfered corner surface 11231 in the thickness direction of the first connection portion 1121 to the thickness h1 of the first connection portion 1121 may be, but is not limited to, 0.3, 0.35, 0.4, 0.45, 0.5, 0.55, 0.6, 0.65, or 0.7.

In another embodiment of this application, with reference to FIG. 7, FIG. 11, and FIG. 12, a ratio of a dimension L1 of the chamfered corner surface 11231 of the provided battery cell 20 in a thickness direction of the first connection portion 1121 to the thickness h1 of the first connection portion 1121 is less than or equal to 0.6, so that the chamfered corner surface 11231 may not be excessively inclined toward the first connection portion 1121, the second connection portion 1123 has good structural strength, and structural strength of the flange 112 is good, to reduce the risk of liquid leakage.

In an embodiment, the ratio of the dimension L1 of the chamfered corner surface 11231 in the thickness direction of the first connection portion 1121 to the thickness h1 of the first connection portion 1121 may be, but is not limited to, 0.2, 0.25, 0.3, 0.35, 0.4, 0.45, 0.5, 0.55, or 0.6.

In another embodiment of this application, with reference to FIG. 7, FIG. 11, and FIG. 12, a ratio of a dimension L1 of the chamfered corner surface 11231 of the provided battery cell 20 in a thickness direction of the first connection portion 1121 to the thickness h1 of the first connection portion 1121 ranges from 0.3 to 0.6, so that the second connection portion 1123 has good structural strength, and structural strength of the flange 112 is good, to reduce the risk of liquid leakage; and the chamfered corner surface 11231 can better assist in bending of the flange 112, and the flange 112 is conveniently processed.

In an embodiment, the ratio of the dimension L1 of the chamfered corner surface 11231 in the thickness direction of the first connection portion 1121 to the thickness h1 of the first connection portion 1121 may be, but is not limited to, 0.3, 0.35, 0.4, 0.45, 0.5, 0.55, or 0.6.

In another embodiment of this application, with reference to FIG. 7, FIG. 11, and FIG. 12, a ratio of a dimension L2 of the chamfered corner surface 11231 of the provided battery cell 20 in a thickness direction (referring to the X-direction shown in FIG. 12) of the pressing portion 1122 to the thickness h2 of the pressing portion 1122 is greater than or equal to 0.3.

The dimension L2 of the chamfered corner surface 11231 in the thickness direction of the pressing portion 1122 is a dimension occupied by the chamfered corner surface 11231 in the thickness direction of the pressing portion 1122.

In the battery cell 20 in this embodiment of this application, the ratio of the dimension L2 of the chamfered corner surface 11231 in the thickness direction of the pressing portion 1122 to the thickness h2 of the pressing portion 1122 is greater than or equal to 0.3, so that an area of the chamfered corner surface 11231 is large, to facilitate processing of the flange 112. If the ratio of the dimension L2 of the chamfered corner surface 11231 in the thickness direction of the pressing portion 1122 to the thickness h2 of the pressing portion 1122 is set to be excessively small, the area of the chamfered corner surface 11231 is small, and the effect of assisting in bending of the flange 112 is not achieved desirably.

In an embodiment, the ratio of the dimension L2 of the chamfered corner surface 11231 in the thickness direction of the pressing portion 1122 to the thickness h2 of pressing portion 1122 may be, but is not limited to, 0.3, 0.35, 0.4, 0.45, 0.5, 0.55, 0.6, 0.65, or 0.7.

In another embodiment of this application, with reference to FIG. 7, FIG. 11, and FIG. 12, a ratio of a dimension L2 of the chamfered corner surface 11231 of the provided battery cell 20 in a thickness direction of the pressing portion 1122 to the thickness h2 of the pressing portion 1122 is less than or equal to 0.6, so that the chamfered corner surface 11231 may not be excessively inclined toward the pressing portion 1122, the second connection portion 1123 has good structural strength, and structural strength of the flange 112 is good, to reduce the risk of liquid leakage. If the ratio of the dimension L2 of the chamfered corner surface 11231 in the thickness direction of the pressing portion 1122 to the thickness h2 of the pressing portion 1122 is set to be excessively large, the chamfered corner surface 11231 is excessively inclined toward the pressing portion 1122, and consequently, the second connection portion 1123 is thin and is prone to fracture.

In an embodiment, the ratio of the dimension L2 of the chamfered corner surface 11231 in the thickness direction of the pressing portion 1122 to the thickness h2 of pressing portion 1122 may be, but is not limited to, 0.2, 0.25, 0.3, 0.35, 0.4, 0.45, 0.5, 0.55, or 0.6.

In another embodiment of this application, with reference to FIG. 7, FIG. 11, and FIG. 12, a ratio of a dimension L2 of the chamfered corner surface 11231 of the provided battery cell 20 in a thickness direction of the pressing portion 1122 to the thickness h2 of the pressing portion 1122 ranges from 0.3 to 0.6, so that the second connection portion 1123 has good structural strength, and structural strength of the flange 112 is good, to reduce the risk of liquid leakage; and the chamfered corner surface 11231 can better assist in bending of the flange 112, and the flange 112 is conveniently processed.

In an embodiment, the ratio of the dimension L2 of the chamfered corner surface 11231 in the thickness direction of the pressing portion 1122 to the thickness h2 of pressing portion 1122 may be, but is not limited to, 0.3, 0.35, 0.4, 0.45, 0.5, 0.55, or 0.6.

In another embodiment of this application, with reference to FIG. 7, FIG. 11, and FIG. 12, the flange 112 of the provided battery cell 20 further includes a third connection portion 1124, and the third connection portion 1124 is connected between the body 111 and the first connection portion 1121; and a rounded corner surface 11241 is formed on a surface of the third connection portion 1124 facing away from the electrode terminal 120.

The third connection portion 1124 is a portion of the flange 112 between the first connection portion 1121 and the body 111. As shown in FIG. 12, the first connection portion 1121 and the third connection portion 1124 may be divided by a horizontal dashed line in the middle, a part above the horizontal dashed line is the first connection portion 1121, and a part below the horizontal dashed line is the third connection portion 1124. The body 111 and the third connection portion 1124 may be divided by a lowest horizontal dashed line, a part below the horizontal dashed line is the body 111, and a part above the horizontal dashed line is the third connection portion 1124. It is to be noted that, the vertical dashed line and the horizontal dashed line in this embodiment of this application are merely auxiliary lines made to describe a relationship between parts of the flange 112, and do not represent any structure in an actual product.

The rounded corner surface 11241 is an arc surface formed on the surface of the third connection portion 1124 facing away from the electrode terminal 120, and the arc surface protrudes toward the electrode terminal 120.

In the battery cell 20 of this embodiment of this application, arrangement of the rounded corner surface 11241 can reduce stress concentration at a joint between the flange 112 and the body 111, and reduce a risk of fracture between the flange 112 and the body 111.

In another embodiment of this application, with reference to FIG. 7 to FIG. 11, a radius R1 of the rounded corner surface 11241 of the provided battery cell 20 is greater than or equal to 0.4 mm.

In the battery cell 20 in this embodiment of this application, the radius R1 of the rounded corner surface 11241 is greater than or equal to 0.4 mm, so that the third connection portion 1124 has a specified thickness, to reduce a fracture risk.

In an embodiment, the radius R1 of the rounded corner surface 11241 may be, but is not limited to 0.4 mm, 0.5 mm, 0.6 mm, 0.7 mm, 0.8 mm, 0.9 mm, 1 mm, 1.1 mm, 1.2 mm, or 1.3 mm.

In another embodiment of this application, with reference to FIG. 11, an auxiliary slot 1112 is formed on a surface of the body 111 of the provided battery cell 20 facing away from the flange 112, and the auxiliary slot 1112 is arranged opposite to the flange 112 and is configured to assist in manufacture of the flange 112.

The auxiliary slot 1112 is a groove that is provided on the surface of the body 111 facing away from the flange 112 and that is opposite to the flange 112. The auxiliary slot 1112 is provided opposite to the flange 112. It may be understood that projections of the auxiliary slot 1112 and the flange 112 in the thickness direction of the body 111 at least partially intersect with each other.

During actual processing, before the flange 112 is processed, the auxiliary slot 1112 is stamped on the surface of the body 111 by using a tool; after the auxiliary slot 1112 is stamped, a protrusion structure is formed on the surface of the body 111 facing away from the auxiliary slot 1112, and then the protrusion structure is pressed, so that a height of the protrusion structure is continuously increased, and the flange 112 is finally obtained.

In the battery cell 20 in this embodiment of this application, the auxiliary slot 1112 is stamped on the surface of the body 111 facing away from the auxiliary slot 1112 to obtain the protrusion structure, and the operation of pressing the protrusion structure to manufacture the flange 112 is simple.

In another embodiment of this application, with reference to FIG. 11 and FIG. 12, a slot depth of the auxiliary slot 1112 of the provided battery cell 20 is H1, and a height difference between the pressing portion

$$\frac{H1}{H2} \geq 0.1$$

1122 and the body 111 is H2, .

In the battery cell 20 in this embodiment of this application, $\frac{H1}{H2} \geq 0.1$, so that a ratio of the slot depth of the auxiliary slot 1112 to the height difference between the pressing portion 1122 and the body 111 is limited, the auxiliary slot 1112 can have a sufficient slot depth, and a height of the protrusion structure protruding out of the body 111 is sufficiently high. In this way, the flange 112 can be conveniently obtained through pressing and processing. If a value of $\frac{H1}{H2}$ is excessively small, the slot depth of the auxiliary slot 1112 is small, and the height of the protrusion structure protruding out of the body 111 is small, making it difficult to process the flange 112.

In an embodiment, the value of $\frac{H1}{H2}$ may be, but is not limited to, 0.1, 0.2, 0.3, 0.4, 0.5, 0.6, 0.7, 0.8, 0.9, 1, 1.1, or 1.2.

In another embodiment of this application, with reference to FIG. 3, the housing 100 of the provided battery cell 20 includes the shell 180 and the end cap 110, and the end cap 110 covers the opening of the shell 180; and the end cap 110 forms the wall part of the housing 100.

The end cap 110 forms the wall part of the housing 100. It may be understood that, components such as the electrode terminal 120, the first insulating member 140, and the sealing member 130 are mounted on the end cap 110. In this way, the components such as the electrode terminal 120, the first insulating member 140, and the sealing member 130 are conveniently mounted, and an assembly operation of the battery cell 20 is simple.

In another embodiment of this application, with reference to FIG. 3, the housing 100 of the provided battery cell 20 includes the shell 180 and the end cap 110, and the end cap 110 covers the opening of the shell 180; and a wall part of the shell 180 forms the wall part of the housing 100.

The wall part of the shell 180 forms the wall part of the housing 100. It may be understood that, components such as the electrode terminal 120, the first insulating member 140, and the sealing member 130 are mounted on the wall part of the shell 180, and specifically may be mounted on any one of a left wall, a right wall, a front wall, a rear wall, and a bottom wall of the shell 180.

In an embodiment, with reference to FIG. 3 to FIG. 14, the housing 100 includes the battery cell 20 and the shell 180. The shell 180 is provided with an opening. The battery cell 20 includes the end cap 110, the sealing member 130, the electrode terminal 120, the first insulating member 140, the second insulating member 150, and the electrical connector 160. Two flanges 112 are arranged on the end cap 110, the end cap 110 is in a long strip shape, the two flanges 112 are arranged at two ends of the end cap 110, and two electrode terminals 120 inside the two flanges 112 are respectively a positive electrode terminal and a negative electrode terminal. The positive electrode terminal and the negative electrode terminal may use a same sealing manner, or may use different sealing manners. The sealing manner may be specifically selected based on an actual requirement.

One of the positive electrode terminal and the negative electrode terminal using the same sealing manner is used as an example for description below:

With reference to FIG. 3 to FIG. 5, the body 111 of the end cap 110 covers the opening. The body 111 and the shell 180 may be connected in a sealing manner such as soldering or using a sealing member. The second insulating member 150 and the electrical connectors 160 are located in the shell 180, and the flanges 112 are located on a side of the body 111 facing away from the shell 180.

With reference to FIG. 6 to FIG. 14, the end cap 110 includes the body 111 and the flanges 112. The first through holes 1111 are provided on the body 111. The first through hole 1111 is a circular hole. The flange 112 protrudes out of the surface of the body 111 and is arranged around a periphery of the first through hole 1111. The sealing member 130 is in an annular shape. A cross section of the sealing member 130 is inverted L-shaped. A vertical segment of the sealing member 130 is inserted into the first through hole 1111. A horizontal segment of the sealing member 130 is arranged around the first through hole 1111 and is located in the space defined by the flange 112. The electrode terminal 120 is stepped cylindrical. The first connection segment 122 and the second connection segment 123 that are coaxially connected and the flange portion 121 arranged around the first connection segment 122 are arranged around the electrode terminal 120. The second connection segment 123 passes through the third through hole 131 defined by the sealing member 130 and then passes through the second insulating member 150 to be electrically connected to the electrical connector 160. The second insulating member 150 is located between the end cap 110 and the electrical connector 160, to reduce a short circuit risk. The second insulating member 150 may be in a long strip shape, match the shape of the end cap 110, and is stacked with the end cap 110. In this way, the short circuit risk is reduced. The electrical connector 160 is L-shaped.

The horizontal segment of the sealing member 130 is sandwiched between the body 111 and the first connection segment 122. The first insulating member 140 is ring-shaped and is arranged around the electrode terminal 120. The first insulating member 140 includes the first insulating portion 141 and the second insulating portion 142 that are connected. The cross section of the first insulating portion 141 is U-shaped. The first insulating portion 141 covers the flange portion 121. The end portion of the flange 112 facing away from the body 111 is bent toward the electrode terminal 120 to form the pressing portion 1122. The pressing portion 1122 presses against the surface of the first insulating portion 141 facing away from the body 111, to push the pressing portion 1122 to press against the horizontal segment of the sealing member 130. The horizontal segment of the sealing member 130 is pressed and tightly sealed. This increases flowing difficulty of the electrolyte solution and reduces the risk of liquid leakage. The pressing portion 1122 is in a shape of an annular sheet. The pressing portion 1122 defines the second through hole 1101. The first connection segment 122 passes through the second through hole 1101. The second insulating portion 142 also passes through the second through hole 1101, and is located between the pressing portion 1122 and the first connection segment 122. The first connection segment 122 protrudes out of the second through hole 1101, to facilitate connection to the external electrical connector. The second insulating portion 142 also protrudes out of the second through hole 1101, to increase a creepage distance.

The flange 112 includes the third connection portion 1124, the first connection portion 1121, the second connection portion 1123, and the pressing portion 1122. The third connection portion 1124, the first connection portion 1121, the second connection portion 1123, and the pressing portion 1122 are all ring-shaped and are all arranged around the electrode terminal 120. The third connection portion 1124, the first connection portion 1121, and the second connection portion 1123 are coaxially connected in sequence from top to bottom and form a hollow cylindrical structure. The third connection portion 1124 is vertically connected to the body 111. The third connection portion 1124, the first connection portion 1121, the second connection portion 1123, and the pressing portion 1122 are integrally formed. The body 111 is provided with the flange 112 through pressing, and the end portion of the flange 112 facing away from the body 111 is bent to form the pressing portion 1122. The pressing portion 1122 is arranged perpendicular to the first connection portion 1121. In this way, the structure of the flange 112 is regular and is convenient to be manufactured. The chamfered corner surface 11231 is formed on the surface of the second connection portion 1123 facing away from the electrode terminal 120, and the angle between the chamfered corner surface 11231 and the axis of the flange 112 is 45°. The rounded corner surface 11241 is formed on the surface of the third connection portion 1124 facing away from the electrode terminal 120, and the rounded corner surface 11241 can reduce stress concentration, to reduce the fracture risk.

The surface of the body 111 facing away from the flange 112 is provided with the auxiliary slot 1112. After the auxiliary slot 1112 is stamped on the body 111, the protrusion structure is formed on the surface of the body 111 facing away from the auxiliary slot 1112, and then the protrusion structure is continuously pressed and raised, to form the flange 112. Then, the end portion of the flange 112 facing away from the body 111 is bent toward the electrode terminal 120, to form the pressing portion 1122.

In another embodiment of this application, with reference to FIG. 2, a battery 1100 is provided, including the foregoing battery cell 20.

In the battery 1100 in this embodiment of this application, the foregoing battery cell 20 is used, and a risk of liquid leakage of the battery cell 20 is low, so that performance and usage reliability of the battery 1100 are good.

Because the battery 1100 in this embodiment of this application uses the technical solutions in any one or several of the foregoing embodiments, the battery 1100 also has all beneficial effects brought by the technical solutions in the foregoing embodiments. Details are not described herein again.

In another embodiment of this application, with reference to FIG. 1, a power consuming apparatus is provided, including the foregoing battery 1100.

In the power consuming apparatus in this embodiment of this application, the foregoing battery 1100 is used, and a risk of liquid leakage of the battery 1100 is low, so that performance and usage reliability of the power consuming apparatus are good.

Because the power consuming apparatus in this embodiment of this application uses the technical solutions in any one or several of the foregoing embodiments, the power consuming apparatus also has all beneficial effects brought by the technical solutions in the foregoing embodiments. Details are not described herein again.

The foregoing descriptions are merely exemplary embodiments of this application, but are not intended to limit this application. Any modification, equivalent replacement, or improvement and the like made within the spirit and principle of this application fall within the protection scope of this application.

**Claims**

1. A battery cell, comprising:

   an electrode assembly;
   a housing, wherein the housing is configured to accommodate the electrode assembly, a wall part of the housing comprises a body and a flange, the body is provided with a first through hole, the flange is arranged around the first through hole, and the body and the flange are integrally formed;
   a sealing member, wherein the sealing member is at least partially arranged around the first through hole;
   an electrode terminal, wherein the electrode terminal is electrically connected to the electrode assembly, the electrode terminal is at least partially located in a space defined by the flange, and the sealing member is at least partially sandwiched between the electrode terminal and the body; and
   a first insulating member, located between the flange and the electrode terminal, to insulate the flange from the electrode terminal, wherein the flange comprises a pressing portion and a first connection portion, the first connection portion connects the body to the pressing portion, the pressing portion presses against the electrode terminal through the first insulating member, to enable the electrode terminal and the body to tightly sandwich the sealing member, and projections of the pressing portion and the electrode terminal in a thickness direction of the body at least partially overlap.

2. The battery cell according to claim 1, wherein the pressing portion extends in a circumferential direction of the flange and forms an annular structure.

3. The battery cell according to claim 2, wherein the pressing portion defines a second through hole, the electrode terminal comprises a flange portion and a first connection segment, the first connection segment passes through the second through hole, the flange portion is arranged around an outer peripheral wall of the first connection segment, the flange portion is located in the space defined by the flange, the first insulating member is at least partially located between the flange portion and the pressing portion, and the sealing member is at least partially located between the first connection segment and the body.

4. The battery cell according to claim 3, wherein the electrode terminal further comprises a second connection segment, and one end of the second connection segment is connected to an end portion of the first connection segment facing away from the pressing portion; and
   the sealing member defines a third through hole, and the second connection segment passes through the third through hole.

5. The battery cell according to claim 3 or 4, wherein a hole diameter of the second through hole is D1, and an outer diameter of the flange portion is d1,

$$\frac{(d1-D1)}{d1} \geq 0.05$$

and/or

$$\frac{(d1-D1)}{d1} \leq 0.4 \, .$$

6. The battery cell according to any one of claims 3 to 5, wherein the hole diameter of the second through hole is D1, and the outer diameter of the flange portion is d1, $d1 - D1 \geq 0.8$ mm and/or $d1 - D1 \leq 3$ mm.

7. The battery cell according to any one of claims 3 to 6, wherein the hole diameter of the second through hole is D1, and an outer diameter of the first connection segment is d2, $D1 - d2 \geq 0.5$ mm and/or $D1 - d2 \leq 2.5$ mm .

8. The battery cell according to any one of claims 3 to 7, wherein the first connection portion is arranged around the first insulating member and defines a fourth through hole, a hole diameter of the fourth through hole is D2, and the outer diameter of the flange portion is d1, D2 - d1 ≥ 0.5 mm and/or D2 - d1 ≤ 2.5 mm .

9. The battery cell according to any one of claims 3 to 8, wherein the first insulating member comprises a first insulating portion and a second insulating portion that are connected, wherein the first insulating portion covers the flange portion, the second insulating portion is located between an inner wall of the second through hole and the outer peripheral wall of the first connection segment, and the pressing portion presses against a surface of the first insulating portion facing away from the body.

10. The battery cell according to claim 9, wherein the second insulating portion protrudes out of a surface of the pressing portion facing away from the body; or a surface of the second insulating portion facing away from the body is flush with a surface of the pressing portion facing away from the body.

11. The battery cell according to any one of claims 1 to 10, wherein projections of the pressing portion and the sealing member in the thickness direction of the body at least partially overlap.

12. The battery cell according to any one of claims 1 to 11, wherein the pressing portion is formed by bending a part of the flange toward an axis of the first through hole.

13. The battery cell according to any one of claims 1 to 12, wherein Brinell hardness of the pressing portion ranges from 10 HBW to 100 HBW.

14. The battery cell according to any one of claims 1 to 13, wherein a material of the pressing portion comprises aluminum alloy.

15. The battery cell according to any one of claims 1 to 14, wherein a thickness of the first connection portion is greater than or equal to 0.8 mm; and/or a thickness of the first connection portion is less than or equal to 1.5 mm.

16. **The** battery cell according to any one of claims 1 to 15, wherein a thickness of the pressing portion is greater than or equal to 0.8 mm; and/or a thickness of the pressing portion is less than or equal to 1.5 mm.

17. The battery cell according to any one of claims 1 to 16, wherein the flange further comprises a second connection portion, the second connection portion connects the first connection portion to the pressing portion, and a chamfered corner surface is formed on a surface of the second connection portion facing away from the electrode terminal.

18. The battery cell according to claim 17, wherein an angle between the chamfered corner surface and an axis of the flange ranges from 30° to 60°.

19. The battery cell according to claim 17 or 18, wherein a ratio of a dimension of the chamfered corner surface in a thickness direction of the first connection portion to the thickness of the first connection portion is greater than or equal to 0.3; and/or a ratio of a dimension of the chamfered corner surface in a thickness direction of the connection portion to the thickness of the connection portion is less than or equal to 0.6.

20. The battery cell according to any one of claims 17 to 19, wherein a ratio of a dimension of the chamfered corner surface in a thickness direction of the pressing portion to the thickness of the pressing portion is greater than or equal to 0.3; and/or a ratio of a dimension of the chamfered corner surface in a thickness direction of the pressing portion to the thickness of the pressing portion is less than or equal to 0.6.

21. The battery cell according to any one of claims 1 to 20, wherein the flange further comprises a third connection portion, and the third connection portion is connected between the body and the first connection portion; and a rounded corner surface is formed on a surface of the third connection portion facing away from the electrode terminal.

22. The battery cell according to claim 21, wherein a radius of the rounded corner surface is greater than or equal to 0.4 mm.

23. The battery cell according to any one of claims 1 to 22, wherein an auxiliary slot is formed on a surface of the body facing away from the flange, and the auxiliary slot is arranged opposite to the flange and is configured to assist in manufacture of the flange.

24. The battery cell according to claim 23, wherein a slot depth of the auxiliary slot is H1, and a height difference between the pressing portion and the body is H2, $\frac{H1}{H2} \geq 0.1$ .

25. The battery cell according to any one of claims 1 to 24, wherein the housing comprises a shell and an end cap, and the end cap covers an opening of the shell; and the end cap or a wall part of the shell forms the wall part of the housing.

26. A battery, comprising the battery cell according to any one of claims 1 to 25.

**27.** A power consuming apparatus, comprising the battery according to claim 26.

1000

FIG. 1

1100

FIG. 2

20

120   111   112

170   111

100   120

180

120

112

110{111
{112

FIG. 3

20

FIG. 4

FIG. 5

FIG. 6

FIG. 7

FIG. 8

110

112 111 112

D D

FIG. 9

E 112 111 112

FIG. 10

Y

X

D2

D1

F 1101 C 11231
1121

H2 1122

α 111

1112 H1 1111 1102 C h1

FIG. 11

FIG. 12

120

FIG. 13

d1

d2

122

121
120 { 122
123

121

123

FIG. 14

## INTERNATIONAL SEARCH REPORT

| International application No. |
| --- |
| **PCT/CN2023/119089** |

| A. | CLASSIFICATION OF SUBJECT MATTER |
| --- | --- |

H01M50/188(2021.01)i; H01M50/103(2021.01)i; H01M50/184(2021.01)i

According to International Patent Classification (IPC) or to both national classification and IPC

| B. | FIELDS SEARCHED |
| --- | --- |

Minimum documentation searched (classification system followed by classification symbols)

H01M50/-

Documentation searched other than minimum documentation to the extent that such documents are included in the fields searched

Electronic data base consulted during the international search (name of data base and, where practicable, search terms used)

CNTXT, ENTXTC, WPABSC, ENTXT, CNABS, CNKI: 本体, 电池, 端子, 翻边, 卷边, 绝缘, 壳, 密封, 通孔, 电极, 极柱, 外壳, battery, cover, hole, terminal, insulat+, seal+, pole, flange

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 108039428 A (SHENZHEN KDL INDUSTRY CO., LTD.) 15 May 2018 (2018-05-15) description, paragraphs 0007 and 0033, and figures 1 and 2 | 1-27 |
| Y | CN 217768552 U (NINGDE CONTEMPORARY AMPEREX TECHNOLOGY CO., LTD.) 08 November 2022 (2022-11-08) description, paragraphs 0005, 0033, and 0035, and figure 5 | 1-27 |
| E | CN 219959211 U (NINGDE CONTEMPORARY AMPEREX TECHNOLOGY CO., LTD.) 03 November 2023 (2023-11-03) claims 1-27 | 1-27 |
| A | CN 101388445 A (BYD CO., LTD.) 18 March 2009 (2009-03-18) abstract | 1-27 |
| A | WO 2023004824 A1 (CONTEMPORARY AMPEREX TECHNOLOGY CO., LTD.) 02 February 2023 (2023-02-02) abstract | 1-27 |
| A | CN 101136459 A (TOYOTA MOTOR CORPORATION) 05 March 2008 (2008-03-05) abstract | 1-27 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 November 2023** | **30 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/119089**

| Patent document cited in search report | | | Publication date (day/month/year) | Patent family member(s) | | | Publication date (day/month/year) |
|---|---|---|---|---|---|---|---|
| CN | 108039428 | A | 15 May 2018 | None | | | |
| CN | 217768552 | U | 08 November 2022 | None | | | |
| CN | 219959211 | U | 03 November 2023 | None | | | |
| CN | 101388445 | A | 18 March 2009 | CN | 101388445 | B | 08 December 2010 |
| WO | 2023004824 | A1 | 02 February 2023 | CN | 215497007 | U | 11 January 2022 |
| | | | | US | 2023033282 | A1 | 02 February 2023 |
| | | | | EP | 4152428 | A1 | 22 March 2023 |
| CN | 101136459 | A | 05 March 2008 | US | 2005278941 | A1 | 22 December 2005 |
| | | | | US | 7700229 | B2 | 20 April 2010 |
| | | | | JP | 2006004778 | A | 05 January 2006 |
| | | | | JP | 4715114 | B2 | 06 July 2011 |
| | | | | DE | 102005027679 | A1 | 12 January 2006 |
| | | | | DE | 102005027679 | B4 | 18 September 2008 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310272167